# EUROPÄISCHE PATENTSCHRIFT

(11) **EP 3 445 596 B1**
(45) Veröffentlichungstag und Bekanntmachung des Hinweises auf die Patenterteilung: **24.06.2020**
(21) Anmeldenummer: 17726109.6
(22) Anmeldetag: 19.04.2017
(51) Int. Cl.: B60F 1/00, B05B 12/12, B05B 1/20, B05B 12/14, B61D 15/00, E01B 37/00, B60F 1/04

(54) **EINRICHTUNG ZUM AUSTRAGEN VON MEHRKOMPONENTENKLEBSTOFFEN AUF EIN KÖRNIGES GEMENGE, SOWIE VERFAHREN ZUM AUSTRAGEN UND VERWENDUNG DER EINRICHTUNG**
DEVICE FOR DISCHARGING MULTI-COMPONENT ADHESIVES ONTO A GRANULAR MIXTURE, DISCHARGING METHOD, AND USE OF THE DEVICE
DISPOSITIF DE DISTRIBUTION D'ADHÉSIFS À PLUSIEURS COMPOSANTS SUR UN MÉLANGE GRANULAIRE, AINSI QUE PROCÉDÉ DE DISTRIBUTION ET UTILISATION DU DISPOSITIF

(30) Priorität: 19.04.2016 CH 5152016
(43) Veröffentlichungstag der Anmeldung: 27.02.2019
(73) Patentinhaber: Hürlimann Railtec AG, 8308 Illnau (CH)
(72) Erfinder: HUERLIMANN, Adrian, 8308 Illnau (CH)
(74) Vertreter: Felber, Josef
(86) Internationale Anmeldenummer: PCT/EP2017/059253
(87) Internationale Veröffentlichungsnummer: WO 2018/010860

(56) Entgegenhaltungen:
- WO-A1-00/74861
- CN-A- 101 850 312
- DE-A1- 10 159 275
- DE-A1- 19 632 638
- FR-A- 371 604
- US-A1- 2006 214 022

## Beschreibung

Die Erfindung betrifft eine Einrichtung zum Austragen von Mehrkomponentenklebstoffen mit mindestens zwei fluidförmigen Komponenten auf ein körniges Gemenge, insbesondere zum Austragen von Mehrkomponentenklebstoffen auf den Schotter einer Eisenbahn-Schienentrasse. Dabei werden über zwei getrennte Zuleitungen die beiden fluidförmigen Komponenten ab Vorratstanks mittels Zahnradpumpen in genau steuerbaren Durchflussmengen über eine Mischereinheit kontrolliert gefördert, womit ein fluidförmiges sprühfähiges Klebstoffgemisch erzeugt wird. Eine Sprüheinheit mit einem Sprühbalken mit mehreren Austragsdüsen dient zum gezielten Austrag des Klebstoffgemisches auf das Schotterbett. Weiter betrifft die Erfindung ein Verfahren zum Einsetzen dieser Einrichtung und ihre Verwendung zum Austragen von Mehrkomponenten-Klebstoffen auf den Schotter eines Eisenschienenstranges.

Schienenwege sind heute eine wichtige Komponente der Infrastruktur im Fernwie im Nahverkehr. Nicht in jedem Fall kann der Schienenoberbau der steigenden Verkehrsbelastung gerecht werden. Mit zunehmender Geschwindigkeit, grösseren Verkehrslasten oder höherer Nutzungsintensität werden Schwächen der unterschiedlichen Bauformen deutlich. Gleiserneuerungen sind neben regelmässiger Instandhaltung notwendige Massnahmen, um der erhöhten Beanspruchung gerecht zu werden. Als Tragschicht dominiert im Fernverkehr der Schotteroberbau. Im städtischen Nahverkehr, auf Brücken oder in Tunneln ist dagegen die Ausbildung einer festen Fahrbahn zu finden. Für beide Ausführungsformen und in der Verbindung unterschiedlicher Fahrbahnen bieten Klebesysteme eine effiziente Problemlösung. Im Schotteroberbau als Trasse liegt der lose verlegte Gleisrost aus Schienen und Schwellen ohne eine seitliche Befestigung in dieser ungebundenen, verdichteten Schotterbettung. Das Schotterbett kann erhebliche Druckkräfte aufnehmen, ist aber bei Zugbelastung bloss in Grenzen verschiebbar. Klebesysteme sichern in schwierigen Bereichen wie etwa an Schienenstössen oder Weichen die Lagestabilität schnell und dauerhaft. Bei Umbauarbeiten und Gleiserneuerungen auf mehrgleisigen Strecken sind besondere Massnahmen zur Lagesicherung des Schotterbettes notwendig. Das Verkleben der Schotterschultern mit Zweikomponenten Harz-Härter-Mischungen hat sich hierfür als wirksame Methode erwiesen. Im Vergleich zu konventionellen Verbaumassnahmen werden durch die Anwendung eines schnell aushärtenden Klebesystems Zeit und Kosten in hohem Mass eingespart. Ein besonders schwieriger Bereich für Schienenfahrwege ist die Einbindung unterschiedlicher Bauformen. Übergänge zwischen einem Schotteroberbau und einer Festen Fahrbahn sind wegen des unterschiedlichen Setzungsverhaltens problematisch. Hier hat sich das abgestufte Verkleben des Schotters als wirkungsvolle Massnahme zur Angleichung unterschiedlicher Elastizitäten bewährt. Auch dafür bieten Klebesysteme besondere Vorteile, nämlich kurze Wartezeiten bis zur Belastbarkeit und eine sehr gute Umweltverträglichkeit des Klebesystems. Im innerstädtischen Nahverkehr sind es vor allem Feste Fahrbahnen und Rasengleise, die das Bild der Schienenfahrwege bestimmen. Auch für diese Ausführungsformen bieten die Zweikomponenten-Mischungen effiziente Detaillösungen zur Stabilisierung, Versiegelung und Gestaltung der Gleisanlagen.

Das Verkleben von körnigem Gemenge findet deshalb heute in verschiedensten Bereichen Anwendung. Im Gleisbau werden vor allem grobkörnige Steinschüttungen und Kies verklebt, im Strassenbau neben grobkörnigen Steinschüttungen dagegen auch kleinkörnigere Steinschüttungen bzw. Splitt. Noch feinere Gemenge werden beispielsweise beim Verkleben von dekorativen Oberbodenbelägen verwendet. Trotz der Stabilisierung durch das Verkleben des Belages kann dessen Wasserdurchlässigkeit bzw. Sickerfähigkeit erhalten werden. Eine besondere Bedeutung hat das Verkleben von Schotter im Gleisbau. Hierzu werden als Klebstoffe heute meistens Zweikomponentenklebstoffe auf Polyurethan-Basis verwendet. Solche Mehrkomponenten-Klebstoffe auf Polyurethan-Basis sind im Stand der Technik bekannt, etwa aus WO 2011/110489 A1. Auch Vorrichtungen das kontrollierte Pumpen, Dosieren, Zusammenmischen und Ausbringen solcher Klebstoffe, unter anderem mit Hilfe von Zahnradpumpen ist im Grundsatz bekannt, etwa aus CN 101 850 312 A, aus DE 196 32 638 A1 oder WO 2014/176589 A1.

Durch die Verklebung von Schotter im Gleisbau werden verschiedene positive Effekte erreicht. So ermöglicht sie unter anderem die Stabilisierung der Gleise und die Reduzierung von Stössen an Übergängen von der Schotterfahrbahn zur Festfahrbahn, beispielsweise an Tunnel-Ein- bzw. Tunnel-Ausfahrten. Zu diesem Zweck wird der Schotter meistens ganzflächig, also auch unter den Schienen und Schwellen, verklebt. Um eine Reduzierung der Stösse an den Übergängen zwischen Schotter- und Festfahrbahn zu erreichen, wird die Eindringtiefe der Verklebung zur Festfahrbahn hin sukzessive vergrössert. Durch die Verklebung des Schotters kann neben dem Fahrkomfort aber auch die Langlebigkeit der Fahrtrassen verbessert werden, da eine Verlagerung der Steine verhindert wird.

Oftmals ist eine Verklebung des Schotterbettes im Randbereich eines Schienenstranges von entscheidender Wichtigkeit, wenn nahe des Schienenstranges ein Graben ausgehoben werden soll, oder wenn ganz allgemein neben dem Schienenstrang infolge eines Bauvorhabens, etwa der Verlegung eines weiteren parallelen Schienenstranges oder eines Gebäudes, einer Stützmauer etc. oder wegen anderer baulichen Massnahmen Material ausgehoben werden soll. Mit einem solchen Aushub wird das Schotterbett ansonsten geschwächt und seine Tragfähigkeit bleibt nicht gewährt. Züge mit ihren erheblichen Gewichten könnten diese Stelle nicht mehr passieren. Als Gegenmassnahme könnte zwar eine tiefe Spriessung oder eine Hilfsmauer die Stabilität temporär gewährleisten, damit der Schienenstrang weiterhin befahren werden könnte. Viel einfacher aber erweist es sich, den Schotter längs der Seite zu verkleben, an welcher solche bauliche Veränderungen vorgenommen werden sollen, die sonst die Schottertrasse wesentlich schwächen würden. Indem also das Schotterbett bloss auf einem Streifen seitlich der Fahrtrasse verklebt wird, kann enorm rasch eine stabile Schotterschulter erzeugt werden. Diese Schulter erweist sich beim Verlegen und Instandhalten von Steuer- und Signalleitungen entlang der Gleise als vorteilhaft, da ausserhalb des verklebten Bereiches ohne Weiteres ein Graben ausgehoben werden kann und die verlegten Steuer- und Signalleitungen dank der definierten stabilen Schulter des Schotterbetts einfach freigelegt und nach Erneuerung der Leitungen der Graben wieder zugeschüttet werden kann, ohne die Grundform des Schotterbetts zu beeinträchtigen. Die durch Verklebung stabilisierte Schotterbett-Schulter bleibt trotz des unmittelbar neben dem Schienentrasse ausgehobenen Grabens weiterhin mit den üblichen Lasten befahrbar. Bei einer fachmännisch verklebten Schottertrasse kann diese gewissermassen seitlich abgestochen werden und unmittelbar neben dem Schotterbett kann zum Beispiel ein Aushub vorgenommen werden. Dank der Verklebung bleibt die nötige Stabilität der Schottertrasse für das gewohnte Befahren mit Zügen erhalten, was enorme Vorteile bietet.

Das Austragen der Klebstoffe zum Erzeugen einer solchen stabilen Verklebung setzt aber voraus, dass die Klebstoffe immer im korrekten Mischungsverhältnis ausgebracht werden, die Eindringtiefe des zusammengemischten Klebstoffes in das Schotterbett eine genau vorgegebene Tiefe überall erreicht und auch die Menge an Klebstoff bei einer definierten Sprühbreite pro Laufmeter exakt gleichbleibend ausgetragen wird. Weiter soll eine solche Verklebung nicht bloss über wenige Meter, sondern über grössere Teilstücke rasch und zuverlässig vorgenommen werden können. Alle nötigen Randbedingungen müssen dabei peinlich genau eingehalten werden, etwa die Temperaturen der Klebstoff-Komponenten, ein absolut gleichbleibendes, laufend überwachtes Mischverhältnis, ein gleichförmiges Austragen über die Behandlungsstrecke mit gleichbleibender Geschwindigkeit des Sprühstrahls über dem Schotter zur Einhaltung einer gleichbleibenden Eindringtiefe in das Schotterbett, Nur so wird sichergestellt, dass der Schotter eine definierte Tiefe mit einer genau definierten Menge Klebstoff pro Schotter-Volumen verklebt wird, abhängig auch von der Grösse der Steine des Schotters und der gewünschten Eindringtiefe. Nur wenn diese Vorgaben peinlich genau eingehalten werden, kann eine solche Verklebung in dem Sinne zertifiziert werden, dass ein Eisenbahnzug von einem bestimmten Gewicht einen Schienenabschnitt weiterhin befahren darf, seitlich dessen wie oben erwähnt Baumassnahmen getroffen werden, also Gräben für Leitungsbauten oder Stützmauern oder Baugruben aller Art ausgehoben werden.

Nach dem Stand der Technik erfolgt der Austrag solcher Klebstoff-Gemische bisher wenig professionell, beschwerlich und fehleranfällig, das heisst nicht regelmässig, und vor allem sehr wenig effizient. Das Austragen erfolgt nämlich manuell mittels Giesskannen oder durch Handlanzen, mit von Hand oder motorisch betätigter Pumpen. Die beiden Grundkomponenten des Klebstoffs werden zum Beispiel auf einem Eisenbahnwagen mitgeführt und auf diesem vermischt. Anschliessend wird das Gemisch in Giesskannen abgefüllt oder über eine Leitung direkt den Handlanzen zugeführt. Um einen m³ Schotter zu verkleben benötigt man 15 Liter Klebstoff-Gemisch und bei einem Ausbringen mittels einer Giesskanne können bloss ca. 4m³ Schotter pro Stunde behandelt werden. Zudem ist die Ausbringqualität in hohem Masse ungleichmässig, da sie von der Geschicklichkeit der Person abhängt, welche mit der Giesskanne giesst oder die Handlanze bedient und damit zu Fuss entlang der Eisenbahn-Schienentrasse geht. Es ist sofort klar, dass damit kein effektiv gleichmässiger Sprühstrahl mit gleichförmiger Geschwindigkeit unter Einhaltung eines gleichbleibenden Abstandes zum Schotter über denselben geführt werden kann. Entsprechend kann eine so erzeugte Verklebung auch nicht zertifiziert werden in dem Sinne, dass die Befahrbarkeit der Schienentrasse gewährleistet werden kann und dabei der Fahrbetrieb weiterhin die volle Versicherungsdeckung geniesst. Diese ist bei Zügen mit hohen Lasten von mehreren 100 Tonnen von grosser Bedeutung. Ein Unfall infolge eines geschwächten Schotterbettes mit unter Umständen Umkippen von Güter- oder Tankwagen und schlimmstenfalls Ausfliessen giftiger Substanzen in den Untergrund hätte für die Versicherung enorme Konsequenzen, weswegen eine von der Versicherung anerkannte Zertifizierung einer Verklebung für das normale Befahren der Schienentrasse bisher nicht möglich war, aber von entscheidender Bedeutung wäre.

Bei einem Austrag des Klebstoffes von Hand erfolgen alsbald Unterbrechungen des Austrags, um eine Giesskanne nachzufüllen, oder um den Nachschub, das heisst die Behälter und die Maschinerie zum Pumpen des Klebstoffes an die Lanze etappenweise vorzurücken, denn diese Behälter und Geräte werden entweder auf einem Eisenbahnwagen mitgeführt oder auf der Strasse antransportiert und seitlich des Schienenabschnittes aufgestellt. Wenn aus irgendeinem Grund eine Störung auftritt, zum Beispiel eine Pumpe nicht korrekt läuft oder ausfällt, kann ein Versprühen einer einzigen, für sich genommen giftigen Komponente in grösserer Menge passieren, was fatale Folgen für das Grundwasser nach sich ziehen kann. Die Komponenten dürfen nämlich nur im vorgeschriebenen Mischungsverhältnis innig vermischt ausgebracht werden. Dann härtet das Gemisch zuverlässig aus und keine Einzelkomponente kann isoliert ins Erdreich gelangen.

Das Verkleben muss rasch erfolgen und bestimmt die Eindringtiefe mit, denn der ausgebrachte Klebstoff rinnt durch den Schotter abwärts und indem er alsbald verklebt und aushärtet, wird die Eindringtiefe begrenzt. Die Arbeiten zum Ausbringen müssen in der Regel ausserhalb der Verkehrszeiten und oftmals nachts erfolgen, und ausserdem ist trockenes Wetter eine Vorausaussetzung zum Ausbringen des Klebstoffes. Man erkennt, dass es viele Randbedingungen gibt und sich daraus die Forderung ergibt, dass ein gleichmässiger Austrag mit genau definierten Vorgaben maschinell zuverlässig und vor Ort sehr rasch erfolgen sollte.

Soll eine Verklebung irgendwo an einem Schienenabschnitt erfolgen, etwa in einem Bahnhof, oder an schwer zugänglichen Stellen wie Brücken, Unter- oder Überführungen, oder allgemein an Orten, wo der Schienenstrang nicht mit Fahrzeugen seitlich zugänglich ist, so ist es eine besondere Herausforderung, dort einen gleichmässigen Austrag rasch vornehmen zu können, möglichst in einem Nu, also ohne irgendwelche Unterbrechungen. Rechnet man mit etwa 15 Liter Klebstoff-Gemisch pro m³ zu behandelnden Gleis-Schotter, so reichen diese bei einem halben Meter zu verklebender Bett-Tiefe und einem halben Meter Bettbreite seitlich der Schiene für 8 Laufmeter, und zwei 200-Liter-Fässer reichen dann für wenig mehr als 200 Meter Schienenabschnitt, und wenn die Verklebung über die volle Schotterbett-Breite erfolgen soll, kann bloss ein Abschnitt von ca. 50 Metern in einem Durchgang verklebt werden.

Eine besondere Herausforderung für das rasche und kontrollierte Austragen von Klebstoffen in perfekter Mischung und mit gleichbleibender Eindringtiefe über grössere Distanzen in einem Nu ist die Tatsache, dass für die nötige Maschinerie und die Vorratsbehälter grosse Massen nötig sind. Nötig sind zum Beispiel leistungsfähige Pumpen. Weiter ist eine autarke Energieversorgung nötig, sowohl für die Pumpen wie auch zum Heizen der auszubringenden Komponenten, die in grosser Menge vorrätig sein müssen. Und dann sollten diese ganzen Einrichtungen längs einer Trasse verschoben werden können. Wollte man hierfür einen Eisenbahnwagen einsetzen, der dann gezogen oder geschoben werden könnte, so wäre dieser viel zu schwer für einen Strassentransport, und das Einsetzen in einem Schienenabschnitt müsste mit grossen Kranwagen erfolgen. Eine solche Einrichtung wäre viel zu schwerfällig, um flexibel und rasch einsetzbar zu sein. Würde man alle Einrichtungen mit einem Lastwagen längs einer Schienentrasse mitführen, so könnte dieser an vielen Stellen nicht längs der Schienentrasse fahren, sondern nur auf freiem Gelände zum Einsatz kommen.

Im Stand der Technik sind verschiedene Vorrichtungen zum kontrollierten Zusammenmischen von Komponenten zu einem definierten Gemisch bekannt, aber es sind keine Einrichtungen bekannt, welche dieses kontrollierte und präzise Ausbringen von Klebstoffen zwecks Verklebung von Schotterbetten längs von Schienentrassen über viele hundert Meter in einem Nu ermöglichen, und die rasch und flexibel einsatzfähig sind.

Aufgabe dieser Erfindung ist es daher, angesichts der Situation wie oben dargelegt eine Einrichtung zu schaffen, mittels welcher das Schotterbett eines Schienentrasse-Abschnittes über seine ganze Breite oder über einen auswählbaren Teil seiner Breite über beliebige Distanzen bis 6 km in einem Nu mit einem Zweikomponenten-Kleber mit einem Minimalaufwand an Personal, nämlich von bloss zwei Personen verklebbar ist, wobei die Einrichtung auf einem einzigen strassentransportfähigen Fahrzeug oder Anhänger zum Einsatzort transportierbar sein soll, überall rasch auf den Schienen des zu behandelnden Abschnittes selbstfahrend einsetzbar sein soll, und mit welcher ein Zweikomponenten-Kleber gesteuert und laufend überwacht in gleichförmiger, wählbarer Geschwindigkeit und mit definierbaren Ausbringungsmengen pro Zeit und somit definierter Eindringtiefe in genau bestimmbaren Bereichen ins Schotterbett in wählbaren Sprühstrahlmustern ausbringbar ist.

Die Lösung der Aufgabe ist durch eine Einrichtung mit den Merkmalen des Anspruchs 1 definiert, sowie durch das Verfahren nach Anspruch 11 und die Verwendung nach Anspruch 15. Diese Einrichtung kann strassentransportiert und hernach auf der Schiene an jede Stelle einer Eisenbahnverbindung gefahren werden, in vielen Fällen sogar strassentransportiert genau an den Einsatzort. Sie kann dort auf die Schiene abgesetzt werden und innert weniger Minuten in Betrieb genommen werden und ebenso rasch wieder vom Schienenabschnitt entfernt werden, um die Durchfahrt nach erfolgten Verklebearbeiten wieder freizugeben. Dabei ermöglicht die Einrichtung das kontrollierte Ausbringen des Klebstoffes in genau definierten Mengen und Mischungsverhältnissen, mit automatischem Vorschub und somit der Sicherstellung einer definierten Eindringtiefe des Klebstoffes in das Schotterbett. Die Einrichtung ist energie-autark und automatisch steuerbar.

Anhand der Zeichnungen wird zunächst das Ergebnis von solchen Verklebungen gezeigt. Dann wird diese Einrichtung für Erzeugen der Verklebungen präsentiert und beschrieben und ihre Funktionen werden erklärt. Dann wird das damit durchführbare Verfahren und die Verwendung der Einrichtung näher beschrieben und erklärt. Hierzu zeigen die Zeichnungen beispielsweise Ausführungen der Einrichtung, und auch die Aufgabenstellung und der Zweck der Erfindung werden anhand der Abbildungen aufgezeigt und erläutert.

Es zeigt:
- Figur 1:: Eine abgestochene, durch vorgängige Verklebung stabilisierte Schottertrasse, an welcher gerade ein Zug vorbeifährt;
- Figur 2:: Eine abgestochene stabilisierte Schottertrasse längs eines Schienenstranges vor einem Tunnelportal;
- Figur 3:: Eine Einrichtung zum Austragen von Klebstoff aus drei Wagen in einer schematischen Darstellung von oben gesehen;
- Figur 4:: Diese Einrichtung auf ihre Front gesehen, das heisst auf die Front des Sprühwagens gesehen, in einem schematischen Aufriss dargestellt;
- Figur 5:: Das Blockschema der Mittel für das Pumpen und Zusammenmischen der Komponenten zu einem sprühfähigen Gemisch auf dem Sprühwagen;
- Figur 6:: Eine Einrichtung, bestehend aus drei Wagen, in perspektivischer Ansicht dargestellt, mit Blick auf den Sprühwagen ganz vorne, den daran anschliessenden Behälterwagen und zuhinterst den Energieversorgungswagen;
- Figur 7:: Den Sprühwagen von schräg hinten gesehen;
- Figur 8:: Den Sprühwagen von vorne gesehen;
- Figur 9:: Einen Kombiwagen für die Energieversorgung und das Mitführen der Behälter, zur Bildung einer zweiteiligen Komposition zusammen mit einem Sprühwagen;
- Figur 10:: Eine Einrichtung, bestehend aus drei Wagen, beim Verladen in einen Anhänger;
- Figur 11:: Eine geeignete Fahrzeug-Anhänger Komposition für den Strassentransport der gesamten Einrichtung und des Personals;
- Figur 12:: Ein Fahrzeug mit Anhänger und der Einrichtung darin, bestehend aus drei Wagen, in einer schematischen Darstellung von oben gesehen, beim Heranfahren mit dem Zugfahrzeug und Anhänger an einen Schienenweg an der Stelle eines Bahnüberganges der Strasse, und hernach das Aufsetzen der drei Wagen auf die Schienen;
- Figur 13:: Die Frontseite des Sprühwagens mit seinem Sprühbalken, wenn dieser Sprühwagen auf einem Schienenstrang steht und die Schienentrasse besprüht;
- Figur 14:: Eine Komposition aus zwei Wagen, nämlich einem Energieversorgungswagen sowie einem Sprüh- und Behälterwagen, im Einsatz auf einem Schienenstrang;
- Figur 15:: Einen Blick auf die Front der Komposition bei der Arbeit, und daneben auf dem Nebengleis eine vorbeifahrende Lokomotive;
- Figur 16:: Einen perspektivischen Blick auf die Komposition von schräg hinten, mit auf dem Nebengleis vorbeifahrendem Zug;
- Figur 17:: Ein schienenfähiges Strassenfahrzeug, auf dem alle Elemente für die elektrische Energieversorgung und Steuerung für das Pumpen mittels Zahnradpumpen, für das Mischen und kontrollierte Austragen der Komponenten eines Mehrkomponentenklebstoffes über den vorne angebauten Sprühbalken vorhanden sind.

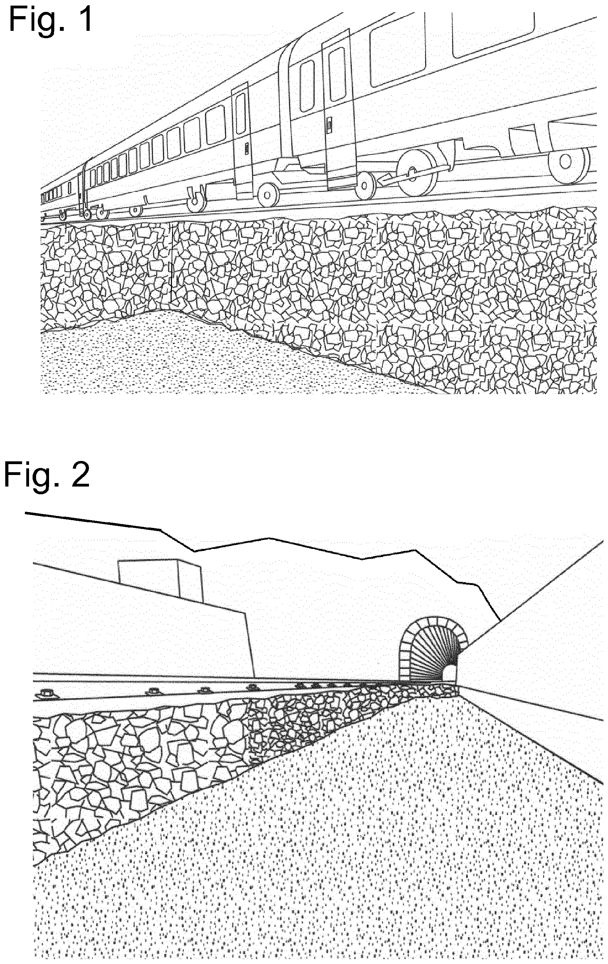

In Figur 1 ist eine Anwendung gezeigt, nämlich eine knapp aussen längs eines Schienenstrangs abgestochene Schottertrasse, die zuvor mittels Aufsprühen eines zweikomponentigen Epoxidharzes verklebt wurde, sodass sie einen quasi monolithischen Bock bildet. In diesem Zustand kann die Schottertrasse mit einer Baggerschaufel abgestochen werden wie hier gezeigt, und sie bleibt trotzdem stabil, sodass sich senkrechte Wände freilegen lassen, ohne dass die Schottertrasse wesentlich von ihrer Tragfestigkeit und Stabilität einbüsst. Wenn immer zum Beispiel Kabel oder Rohre längs eines solchen Schienenstranges verlegt werden müssen, ergeben sich grosse Herausforderungen für den Erhalt der Stabilität der Schienentrasse, wenn diese weiterhin mit Zügen befahren werden soll, das heisst während der Einbauarbeiten für die Leitungen und Rohre. Ohne die Möglichkeit einer Trassenstabilisierung müsste der Schienenstrang für den Schienenverkehr gesperrt werden, was grosse Einschränkungen und teure Ausfälle für die Bahnbetreiber bedeuten würde.

Die Figur 2 zeigt eine weitere durch Verklebung stabilisierte und dann abgestochene Schottertrasse längs eines Schienenstranges vor einem Tunnelportal. Wie man sieht, muss ein Graben oftmals über ansehnliche Strecken ausgehoben werden, und hier nun stellt sich besonders das Problem, wie man eine Schottertrasse über grössere Distanzen so zuverlässig und sicher stabilisieren kann, dass die später abgestochene Trasse für das Befahren mit Zügen mit Normallast zertifiziert werden kann. Bei einem Austragen von Hand kann niemand die Homogenität der Verklebung garantieren. Zudem geht das Verkleben von Hand viel zu langsam vonstatten, ist personalintensiv, ungenau und entsprechend teuer. Hier setzt die vorliegende Erfindung an und ermöglicht es in einer ganz anderen Dimension, Schottertrassen zu verkleben, und zwar viel schneller und rationeller, dazu komplett homogen, mit genau gleichbleibender wählbarer Breite der Verklebung und mit über die ganze Verklebung hinweg genau definierbarer Eindringtiefe des Klebstoffes. Nur ein solches maschinelles Austragen des Klebstoffes kann so genau erfolgen, dass die Verklebung und Stabilisierung zertifizierbar ist, sodass ein Bahnbetreiber die Gewissheit haben kann, dass auch vollbeladene Züge ohne Weiteres diese verklebte Trasse bedenkenlos befahren können und versicherungstechnisch auch dürfen.

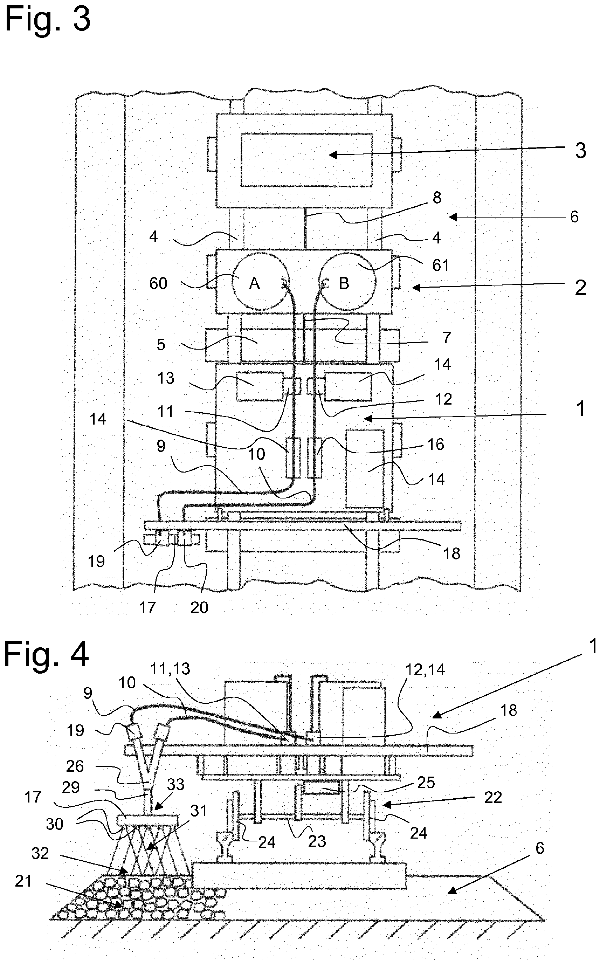

Die Figur 3 zeigt hierfür eine beispielsweise Einrichtung zum Ausbringen des Klebstoffes, bestehend aus drei Wagen, in einer schematischen Darstellung von oben gesehen. Die entscheidende Lösung für das Realisieren einer strassentransportfähigen Einrichtung, die von bloss zwei Personen bedient werden kann, ist es, dass die Einrichtung entweder direkt auf einem schienenfähigen Strassenfahrzeug aufgebaut ist, welches vor Ort direkt auf einen Schienenstrang auffahrbar und darauf fahrbar ist, oder aber dass sie funktional unterteilt wird, in mindestens zwei oder aber drei Einheiten bzw. zwei oder drei separate Wagen, die getrennt auf ein Strassenfahrzeug oder einen Strassenanhänger auflad- und wieder abladbar sind und somit auch getrennt, bzw. gesondert von bloss zwei Personen auf die Schienen eines Schienenstranges aufgesetzt werden können. Ein einzelner Wagen ist dabei ca. 350kg schwer, und nur der Wagen mit den Komponentenbehältern, leer ca. 250kg schwer, ist je nach Beladung schwerer, bis zu 2000kg. Würde die Einrichtung hingegen als eine einstückige Maschine gebaut, so würde sie wohl funktionieren, aber ihr Handling und ihr Transport würde ungleich komplizierter. Sie wäre kaum mehr von wenig Personal und ohne Kran auf ein Fahrzeug ladbar und auf einen Schienenstrang aufsetzbar. Ausserdem würde es technisch sehr anspruchsvoll, eine solch schwere Einrichtung an den Einsatzort zu bringen und dort auf die Schienen aufzusetzen.

Und so zeigt die Figur 3 eine erfindungsgemässe Einrichtung auf Schienenwagen, die auf Eisenbahnschienen 4 abgestellt sind, schematisch dargestellt von oben gesehen, im Grundriss. Die Eisenbahnschienen 4 stehen hier auf den Querbalken 5, die in die Schottertrasse 6 eingebettet sind. Die Komposition von Schienenwagen besteht hier aus drei Einheiten, die zusammengekoppelt werden können und auch wieder leicht getrennt werden können. Die vorderste Einheit bildet einen Sprühwagen 1 mit vier Schienenrädern, gefolgt von einem ersten Anhänger als Behälterwagen 2, ebenfalls mit vier Schienenrädern, und einem hinten an diesen angekoppelten zweiten Anhänger mit vier Schienenrädern als Energieversorgungswagen 3. Diese Anhänger 2, 3 sind über lösbare Deichseln 7, 8 zusammengekoppelt. Die Wagen sind hierzu mit kugelförmigen Anhängerhaken ausgerüstet. Die Deichseln können zum Beispiel je aus zwei konventionellen PKW-Anhängerdeichseln hergestellt sein, sodass man eine Deichsel 7,8 in Form einer einzigen Stange von etwa einem halben Meter Länge erhält, die an beiden Enden eine Kupplungspfanne aufweist. Auf dem Sprühwagen 1 erkennt man die beiden Zufuhrleitungen 9, 10 für die beiden Komponenten des Epoxidharz-Gemisches. Sie führen durch zwei Zahnradpumpen 11, 12, die je von einem Elektromotor 13, 14 präzise steuerbar angetrieben werden. Von den Zahnradpumpen 11, 12 aus führen die Zufuhrleitungen 9, 10 weiter durch je ein Massendurchfluss-Messgerät 15, 16 und schliesslich zum Sprühbalken 17, wo sie über eine Y-förmige Zusammenführung an eine oder mehrere Sprühdüsen führen. Der Sprühbalken 17 kann über einen horizontal verlaufenden Ausleger 18, der sich quer über mehr als die Breite des Sprühwagens erstreckt, verschoben werden, sodass ein Sprühen rechts oder links vom Wagen oder in jeder beliebigen Position dazwischen möglich ist. Der Sprühbalken 17 kann um seine Hochachse verschwenkt werden, je nach Bedarf, um die Sprühbreite zu variieren. Vor den Sprühdüsen sind Pneumatikventile 19, 20 eingebaut, um den Durchfluss bei Bedarf scharf bzw. augenblicklich zu stoppen. Von der Kupplungsstange 7 gezogen folgt hinter dem Sprühwagen 1 der Behälterwagen 2, welcher hier zwei 200 Liter Fässer 60, 61 trägt, für die beiden Komponenten A und B des Epoxidharz-Klebers. Über eine weitere Kupplungsstange 8 wird der hinterste Wagen, nämlich der Energieversorgungswagen 3 gezogen.

Die selbstfahrende Einheit, das heisst der Sprühwagen 1, ist in Figur 4 in einer Ansicht von vorne gesehen dargestellt. Unterhalb der Schienen 4 erkennt man das Schotterbett 6, welches aus einem körnigen Gemenge aus einer Vielzahl von Schottersteinen 21 besteht, wobei in der Figur 4 lediglich auf einer Seite solche Schottersteine 21 angedeutet sind. Der Sprühwagen 1 beinhaltet ein Fahrgestell 22 mit zwei Achsen 23 und vier Rädern 24. Die Räder 24 auf beiden Seiten des Wagens sind auf ihren Achsen 23 längs der Achsen verschiebbar und mit einer mechanischen Kopplung versehen, sodass sie sich symmetrisch nach aussen oder innen verschieben. Das heisst die Räder 24 aller Wagen 1, 2, 3 sind Teil eines Spurwechselsystems, womit die Wagen 1, 2, 3 auf den grössten vorkommenden Spurbreiten bis hin zu den schmalsten Gleisspurweiten einsetzbar sind. Die Räder auf mindestens einer der Achsen 23 können durch einen elektrischen 24V-Fahrmotor 25 angetrieben werden. Auf dem selbstfahrenden Sprühwagen 1 ist zur Steuerung der Durchflussrate der ersten Komponente A eine erste Zahnradpumpe 11 mit einem zugehörigen drehzahlgeregelten, elektrischen Antrieb 13 angeordnet. Von dieser ersten Zahnradpumpe 11 führt ein Abschnitt einer ersten Zufuhrleitung 9 zu einem ersten, hier allerdings nicht dargestellten Massendurchfluss-Messgerät, welches zur Erfassung der Durchflussrate dient. Vom Massendurchfluss-Messgerät führt ein weiterer Abschnitt der ersten Zufuhrleitung 9 zu einem ersten steuerbaren Pneumatikventil 19 und weiter zu einem ersten Rückschlagventil und mündet über einen Y-Fitting 26 in eine Mischereinheit 29. Parallel dazu ist eine identische zweite Zahnradpumpe 12 für die zweite Komponente B mit einem zugehörigen drehzahlgeregelten, elektrischen Antrieb 14 angeordnet. Von der zweiten Zahnradpumpe 12 führt ein Abschnitt einer zweiten Zufuhrleitung 10 zu einem zweiten, hier allerdings nicht dargestellten Massendurchfluss-Messgerät, und weiter zu einem zweiten steuerbaren Pneumatikventil 20 und dann zu einem zweiten Rückschlagventil bis in die Mischereinheit 29. Die Mischereinheit 29 beinhaltet im Innern einen statischen Mischer, beispielsweise in Form einer ca. 10 cm langen gitterförmigen Struktur oder einem Wendelmischer, und ist an einem Ausleger 18 befestigt. Ein durchschnittlicher Innendurchmesser der Zufuhrleitungen 9, 10 misst beispielsweise 1.5 cm. An der Fluid-Austrittsseite 33 der Mischereinheit 29 ist eine Austragsvorrichtung in Form eines Sprühbalkens 17 angebracht. Der Sprühbalken 17 besteht aus einem horizontal verlaufenden hohlzylindrischen Profil mit beispielsweise fünf in regelmässigen Abständen von 5 cm nebeneinander angeordneten und auswechselbaren Flachstrahldüsen 30 mit einem Düsendurchmesser von jeweils z.B. 1 mm. Jede der Flachsstrahldüsen 30 kann dabei einen fächerartigen Strahl 31 erzeugen. Die Flachstrahldüsen 30 sind so nebeneinander angeordnet, dass die damit erzeugbaren Stahlen 31 in einem zu besprühenden Bereich 32 auf dem Schotterbett 6 zusammen einen durchgehenden flächigen bzw. vorhangartigen Gesamtstrahl bilden. Eine Sprühbreite des Gesamtstrahls im Auftragsbereich 32 auf dem Schotterbett 6 beträgt beispielsweise ca. 55 cm. Der Abstand zwischen den Flachstrahldüsen 30 und dem Schotterbett beträgt dabei ca. 40 cm.

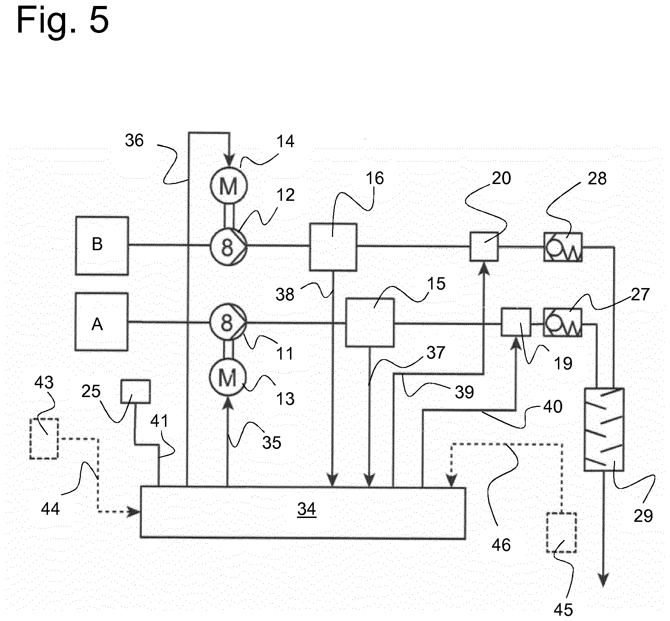

Die Figur 5 zeigt ein Blockschema mit allen Mitteln für das Pumpen und Zusammenmischen der Komponenten zu einem sprühfähigen Gemisch auf dem Sprühwagen. Die beiden elektrischen Antriebe 13, 14 der beiden Zahnradpumpen 11, 12 können wie gezeigt über je eine Steuerleitung 35, 36 unabhängig voneinander durch die Steuereinheit 34 durch Ausgabe von zwei unabhängigen Ausgangssignalen angesteuert werden. Dadurch können die Förderleistungen der beiden Zahnradpumpen 11, 12 und somit die Durchflussraten in den beiden Zufuhrleitungen 9, 10 unabhängig voneinander kontrolliert werden. Über die Signalleitungen 37, 38 zwischen den beiden Massendurchfluss-Messgeräten 15, 16 und der Steuereinheit 34 können die Durchflussraten in den beiden Zufuhrleitungen 9, 10 unabhängig voneinander erfasst, kontrolliert und in der Steuereinheit 34 verarbeitet werden.

Über weitere Signalleitungen 39, 40 zwischen der Steuereinheit 34 und den beiden Pneumatikventilen 19, 20 lassen sich diese öffnen und schliessen. Hinter den Pneumatikventilen 19, 20 folgt je ein Rückschlagventil 27, 28. Zwischen der Steuereinheit 34 und dem 24V-Fahrmotor 25 existiert eine weitere Signalleitung 41, welche eine Steuerung der Geschwindigkeit des Sprühwagens 1 ermöglicht. Die Steuereinheit 34 verfügt über eine Mikroprozessorsteuerung mit einem Speicher und einer Recheneinheit. Im Speicher können beispielsweise über die Bedieneinheit oder eine Eingabeschnittstelle die einzuhaltenden Mischverhältnisse zwischen den Komponenten A und B, die gewünschten Durchflussraten bzw. Gesamtdurchflussraten und die Geschwindigkeit des Sprühwagens 1 als Sollwerte eingegeben und abgelegt werden. Die Recheneinheit ist dabei so programmiert, dass sie ein Regelungsprogramm abarbeitet, welches gewährleistet, dass die Mischverhältnisse zwischen den Komponenten A und B und die Durchflussraten bis auf wenige Prozent genau eingehalten werden. Bei grösseren Abweichungen wird die Austragung der Komponenten A und B automatisch gestoppt.

So kann z.B. zwischen den beiden Zahnradpumpen 11, 12 je ein Überdruckventil in die Zuführleitungen 9, 10 integriert werden und der Ausgang der Überdruckventile kann mit Rückleitungen ausgestattet werden, mit welchen eine bei geöffnetem Überdruckventil austretende fluidförmige Komponente A bzw. B in einen zugehörigen Abschnitt der Zuleitung vor der zugehörigen Zahnradpumpe 11 bzw. der Zahnradpumpe 12 zurückgeführt werden kann. Prinzipiell können die Massendurchfluss-Messgeräte 15, 16 auch weggelassen werden und stattdessen können zusätzliche Lagegeber an den Zahnradpumpen 11, 12 und/oder den zugehörigen Antrieben 13, 14 vorgesehen werden.

Wie im Blockschema nach Figur 5 weiter gezeigt, kann ein Geschwindigkeitssensor 43 vorgesehen werden, welcher über eine zugehörige Signalleitung 44 Angaben zur aktuellen Fahrgeschwindigkeit des Sprühwagens 1 an die Steuereinheit 34 übermittelt. Dadurch ist es möglich, den Durchsatz der beiden fluidförmigen Komponenten in Abhängigkeit der jeweils aktuellen Geschwindigkeit des Sprühwagens 1 exakt zu regeln. Weiter kann beispielsweise die Austragungsvorrichtung oder der Sprühbalken 17 am Ausleger 18 entlang bewegbar angeordnet werden. Hierfür kann z.B. ein Zahnstangenantrieb eingesetzt werden. Durch die Bewegbarkeit lässt sich die Breite des besprühbaren Bereichs 32 massiv vergrössern. Die Steuerung der Bewegung des Sprühbalkens 17 der Austragungsvorrichtung kann wiederum von der Steuereinheit 34 kontrolliert und z.B. mit der Geschwindigkeit des Sprühwagens 1 und den Durchflussraten synchronisiert werden. Weiter ist es möglich, einen im Blockschema nach Figur 5 angedeuteten Sensor 45 vorzusehen, mit welchem die Beschaffenheit des zu besprühenden Bereichs laufend geprüft und über die Signalleitung 46 an die Steuereinheit 34 übermittelt werden kann. Hierfür können zum Beispiel Ultraschallsensoren und/oder laserbasierte Sensoren eingesetzt werden. Damit können nicht zu besprühende Bereiche wie Schwellen 5 oder Schienen 4 automatisch erkannt und der Austrag beim Überfahren dieser Bereiche kann unterbrochen werden. Dies spart einerseits Klebstoff und reduziert andererseits den Aufwand, da diese Bereiche nicht vorgängig abgedeckt werden müssen. Weiter können am Sprühwagen 1 zusätzliche Blenden angebracht werden, welche beispielsweise verhindern, dass die Schienen 4 beim Austragen mit Klebstoff beschichtet werden. Insgesamt kann das Ausbringen der beiden zusammengemischten Komponenten A, B vollautomatisch erfolgen, indem alles von der programmierbaren Steuereinheit 34 gesteuert wird. Sie sorgt dafür, dass die ganze Einrichtung mit ihrer Wagen-Komposition mit gleichförmiger Geschwindigkeit und gleichmässigem Austrag des Klebestoffes auf genau vorgeschriebener Breite und in so einer Menge erfolgt, dass genau die richtige Eindringtiefe eingehalten wird. Es kann auch programmiert werden, dass die Eindringtiefe über eine bestimmte Wegstrecke variiert, also etwa stetig tiefer wird, oder ab einer bestimmten Tiefe stetig weniger tief wird.

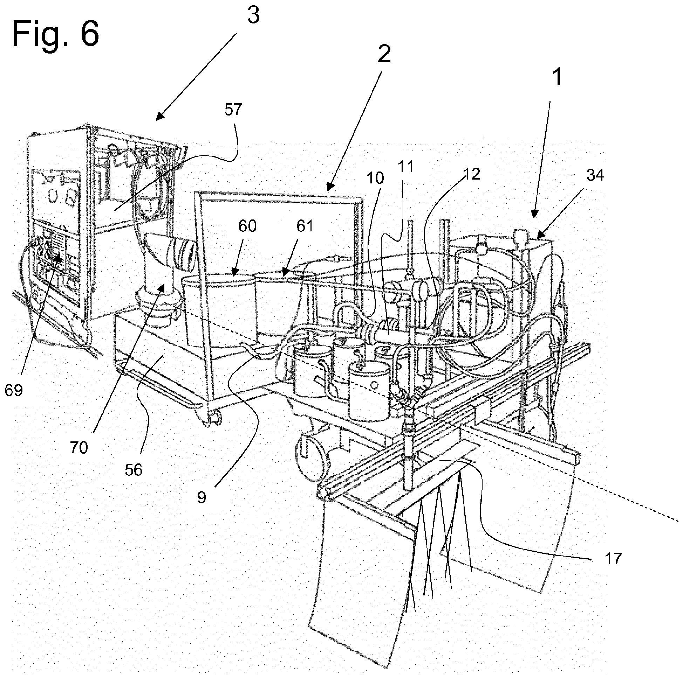

In Figur 6 ist die Einrichtung als Komposition aus drei Wagen dargestellt, mit zuvorderst dem Sprühwagen 1, welcher in der Grössenordnung ca. 350 kg wiegt. Auf dem ersten Anhänger, dem Behälterwagen 2, welcher direkt an den selbstfahrenden Sprühwagen 1 gekoppelt ist, befindet sich ein erster fassförmiger Behälter 60 mit einem flüssigen Polyurethanharz und ein zweiter fassförmiger Behälter 61 mit einem flüssigen Härter. Die in den beiden Behältern 60, 61 vorliegenden Flüssigkeiten sind die Komponenten A, B eines Zweikomponentenklebstoffs auf Polyurethanbasis. Dieser Behälterwagen wiegt ca. 250 kg, und wenn voll beladen bis zu 2'000 kg, je nach dem Fassungsvermögen der aufgeladenen Behälter. Aus diesen Fässern oder Behältern 60, 61 führen die Zufuhrleitungen für die Klebstoff-Komponenten A, B zum Sprühwagen 1 und schliesslich nach dem Zusammenmischen durch Vereinigung in einem Mischer, zum Beispiel einem Wendelmischer, zu den Sprühdüsen am Sprühbalken 17. Die Viskositäten der beiden flüssigen Komponenten liegen im Bereich von ca. 200 mPas. Die beiden Behälter 60, 61 haben z.B. einen Inhalt von je 200 Liter, wobei auch grössere oder kleinere Behälter einsetzbar sind. Als Besonderheit sind diese Behälter 60, 61 in Aufnahmeausnehmungen in der Oberseite eines sonst hohlen Kastens einstellbar, wobei das Innere des Kastens als Auffangwanne 56 im Fall einer Leckage wirkt und heizbar sowie belüftbar ist, um die Komponenten A, B stets auf ihrer idealen Temperatur zu halten. Die Heizung kann eine temperaturgeregelte elektrische oder eine Gasheizung sein, mit Propangas, wie auf Campingplätzen üblich. Die Behälterwanne 56 ist ausserdem mit einer Belüftung ausgerüstet, von welcher man hier das Entlüftungsrohr 70 erkennt, was ebenfalls zur Temperierung der Komponenten dient, falls diese im Sommer zur warm werden. Ein weiterer Abschnitt der ersten Zufuhrleitung 9 verbindet dabei den ersten Behälter 60 mit der ersten Zahnradpumpe 11 und ein weiterer Abschnitt der zweiten Zufuhrleitung 10 verbindet den zweiten Behälter 61 mit der zweiten Zahnradpumpe 12.

Im zweiten Anhänger, dem Energieversorgungswagen 3 mit einem Gewicht in der Grössenordnung von 350 kg ist ein Dieselmotor und zuschaltbarer stromerzeugender Dieselgenerator mit 400 V Ausgangsspannung untergebracht, sowie eine Drucklufterzeugungsanlage mit Druckluftbehälter, deren Kompressor ebenfalls vom Dieselmotor antreibbar ist, und weitere Hilfsmittel zum Betrieb der Einrichtung. Strom und Druckluft werden von diesem Energieversorgungswagen 3 über nicht gezeigte Leitungen über den Behälterwagen 2 nach vorne zum Sprühwagen 1 geleitet. Elektrische Energie wird u.a. zum Fahren der Wagen mittels der 24V-Fahrmotoren benötigt. Die Sekundärantriebe für die Wagenräder können zum Beispiel Kettenantriebe oder Zahnriemen sein. Mit Elektromotoren werden auch die Zahnradpumpen auf dem Sprühwagen angetrieben und wahlweise kann auch die Heizung auf dem Behälterwagen 2 eine elektrische sein. Weiter benötigt die Steuereinheit 34, die entweder auf dem Energieversorgungswagen 3 oder auf dem Sprühwagen 1 untergebracht ist, elektrischen Strom. Diese Steuereinheit 34 verarbeitet die Signale der Massendurchfluss-Messer und aller übrigen Sensoren, etwa von jenen für das Messen der Fahrgeschwindigkeit und vom Thermometer auf dem Behälterwagen 2. Sie generiert daraus Steuersignale für die Zahnradpumpen, für die pneumatischen Sicherheits-Ventile bei den Sprühdüsen und für die Antriebsmotoren für das Fahren sowie für die Heizung und Kühlung der Komponenten A, B. Druckluft wird für die pneumatischen Sicherheits-Ventile benötigt, sowie für allfällige Druckluftwerkzeuge am Energieversorgungswagen 3. Dieser kann nämlich in einen Arbeitsplatz ausgestaltet sein, mit einer Arbeitsfläche 57 wie die einer Werkbank, und mit allerlei Werkzeugen für irgendwelche möglichen Service- und Reparaturarbeiten, die nötig werden könnten. Man erkennt in der Figur 6 einzig das Schalttableau 69 für die Bedienung des Dieselmotors und Generators sowie des Kompressors für die Drucklufterzeugung. Auf dem Sprühwagen 1 befindet sich hier eine Steuereinheit 34 mit einer Bedieneinheit, einer Anzeigeeinheit, einer Mikroprozessorsteuerung und mehreren Ein- und Ausgabeschnittstellen. Die Steuerungs- und Energieleitungen zwischen den verschiedenen Bauelementen sind in der Figuren 6 allerdings nicht explizit dargestellt, sondern diese Leitungen erschliessen sich aus dem bereits beschriebenen Blockschema gemäss Figur 5.

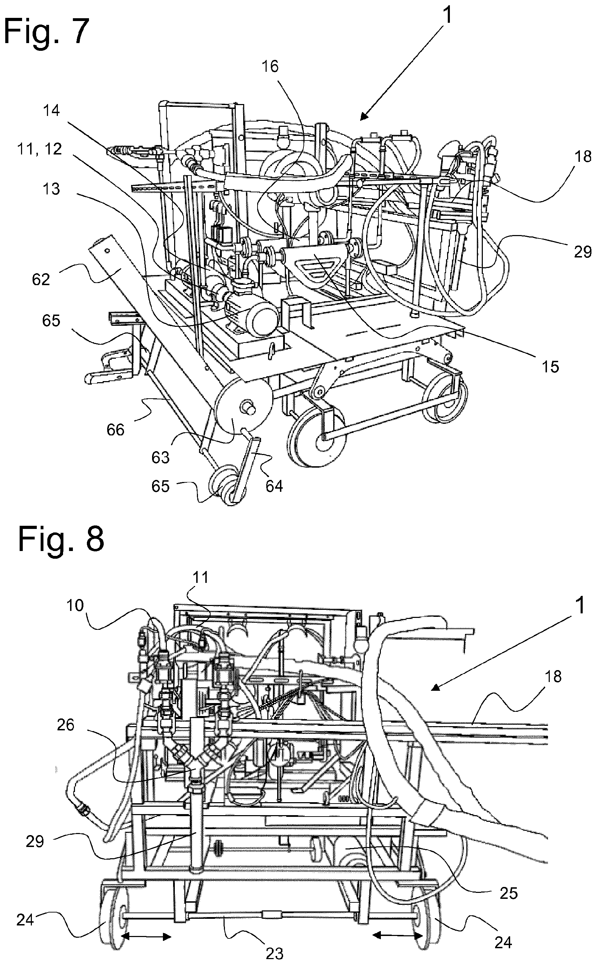

Die Figur 7 zeigt einen Sprühwagen 1 in einer Ansicht von schräg hinten. Deutlich erkennt man hier die beiden Elektromotoren 13, 14 für die Zahnradpumpen 11, 12 zum genau dosierten Fördern der beiden Klebstoff-Komponenten A, B, und weiter sieht man auch die beiden Massendurchfluss-Messgeräte 15,16. Der Hebel 62 hinten am Wagen dient zum Anheben des Sprühwagens 1, damit dieser von ebenem Boden aus auf eine auf diesem Boden liegende Schiene gehievt werden kann. Wird der Hebel 62 von Hand nach unten geschwenkt, so dreht er das Schwenkrad 66 und dieses den Lasthebel 64 in gleicher Richtung. Das bewirkt, dass sich das Fahrwerk des Sprühwagens 1 hinten an den beiden Stützrädern 65 abhebt, die mit einer Verbindungsachse 66 verbunden sind. Vorne am Wagen erkennt man den Ausleger 18 mit dem daran hin und her verschiebbaren Mischer, zum Beispiel einem Wendelmischer 29.

In Figur 8 ist der Sprühwagen 1 von vorne gesehen darstellt, und hier erkennt man den Ausleger 18 sowie die daran hin und her verschiebbare Sprüheinheit, mit welcher die beiden Zufuhrleitungen 10,11 über ein Y-Fitting 26 zusammengeführt und die Komponenten A, B in einen Mischer, hier in einen Windelmischer 29 gepumpt werden. Unten mündet der Wendelmischer 29 in den nicht eingezeichneten Sprühbalken.

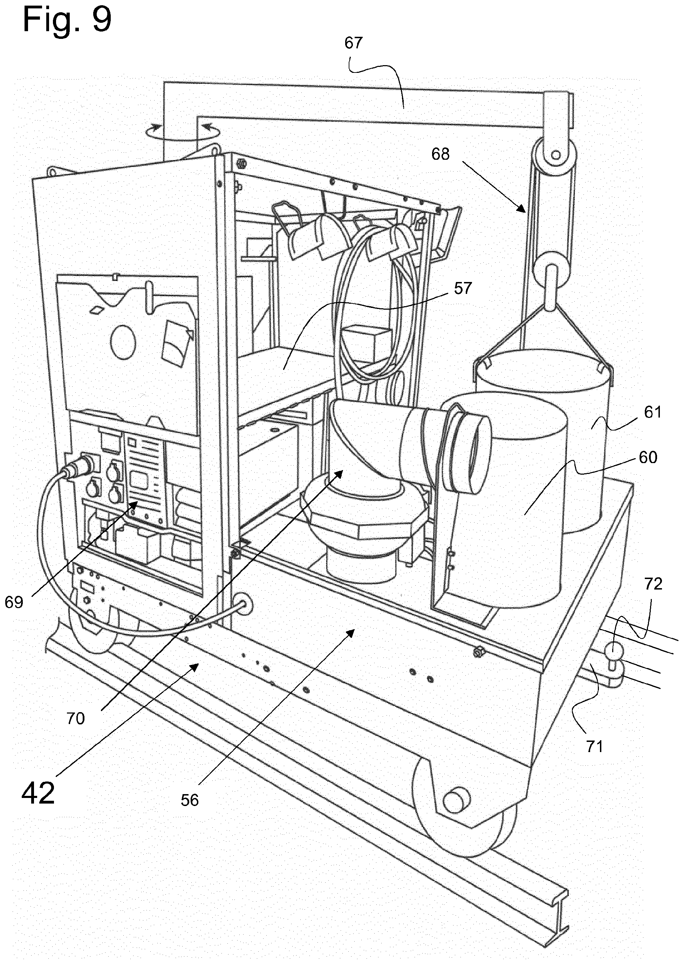

Anstatt die Einrichtung in drei separate Wagen zu unterteilen wie eben vorgestellt, kann auch eine Ausführung mit bloss zwei Wagen umgesetzt werden. In diesem Fall werden zum Beispiel der Behälterwagen 2 und der Energieversorgungswagen 3 in einen einzelnen Wagen 42 zusammengefasst, wie in Figur 9 dargestellt. Zusammen mit einem gesonderten Sprühwagen 1 bildet auch diese Komposition eine geeignete Einrichtung, wenn beiden Wagen 1, 42 etwa gleichschwer ausgelegt werden, um die ca. 500kg. Das Handling dieser Einrichtung und ihrer beiden Wagen 1, 42 lässt sich von zwei Personen bewältigen. Somit wird die Einrichtung noch kompakter und das Einrichten geht noch rascher vonstatten, weil nur zwei Wagen statt drei vor Ort zusammengekoppelt werden müssen. Vorne an diesem Wagen 42 erkennt man die Anhängevorrichtung 71 mit einer Kupplungskugel 72 für dieses Zusammenkoppeln. Auf diese Kugel 72 lässt sich die Kugelpfanne einer Deichsel ankuppeln, wobei die Deichsel an ihrem anderen Enden ebenfalls über eine Kugelpfanne verfügt, zum Ankuppeln dies nächsten Wagens, etwa eines Behälterwagens oder Sprühwagens. Der Wagen ist mit einem Kran 67 mit Flaschenzug 68 oder elektrischem Antrieb ausgestattet, sodass die Behälter 60, 61 mit Leichtigkeit von einem Fahrzeug aus in die Aufwangwanne 56 gehievt und dort einsetzbar sind.

Andererseits ist die Komposition auch so aufteilbar, dass der Sprühwagen 1 gleichzeitig die Behälter für die beiden Komponenten A, B aufnimmt, und der zweite Wagen einzig der Energieversorgung dient, das heisst der Stromerzeugung und Drucklufterzeugung und -versorgung, sowie mit seiner Arbeitsfläche 57 als Werkstattwagen dient.

Die Unterteilung in diese entweder zwei 1, 42 oder drei Wagen 1, 2 und 3 ist der Schlüssel für die Flexibilität der Einrichtung, damit sie mit einem Strassenfahrzeug zum Einsatzort gebracht werden können. Dank der Unterteilung in zwei oder drei ungefähr gleichschwere Wagen lässt sich das Gesamtgewicht der Einrichtung in jedem Fall von bloss zwei Personen umschlagen. Damit lässt sich die Einrichtung sogar auf 3.5 Tonnen Fahrzeugen auf der Strasse transportieren und am Einsatzort wieder von bloss zwei Personen auf die Schienen eines Eisenbahn-Schienenstranges aufsetzen und in Betrieb nehmen.

Für ganz lange zu verklebende Strecken lässt sich ein grosser Tankwagen in Form eines Güterwagens mit einer Mehrzahl darauf abgestellter grosser Behälter als hinterster Wagen nachziehen. Aus diesem Eisenbahnwagen führen dann Zufuhrleitungen in den Behälterwagen und seine Behälter 60, 61, die dann als Puffer dienen, zum Vorheizen der Komponenten auf die ideale Temperatur. Für solche Einsätze ist es vorteilhaft, wenn alle zwei oder drei Wagen der Einrichtung als selbstfahrende Wagen ausgeführt sind, also je ihre Räder mittels Elektromotoren antreibbar sind. Mit Vorteil wird die Geschwindigkeit zwischen den verschiedenen selbstfahrenden Wagen mit der Fahrgeschwindigkeit der Rangierlok synchronisiert. Der Strom hierfür wird vom 400V-Generator auf dem Energieversorgungswagen 3 bereitgestellt. Bei einer ganz grossen Menge an mitgeführten Klebstoff-Komponenten auf einem langen Güterwagen muss die Einrichtung evtl. von einer separaten Rangierlok geschoben werden. Der beschriebene Geschwindigkeitssensor 43 stellt sicher, dass der Durchsatz der beiden fluidförmigen Komponenten in Abhängigkeit der jeweils aktuellen Geschwindigkeit des Fahrzeugs exakt geregelt wird. Geschwindigkeitsänderungen einer allfälligen zusätzlichen Rangierlok können damit ausgeglichen werden. Der Sprühwagen mit seinen Pumpen erlaubt es, ca. 21 m³ Gleis-Schotter pro Stunde zu verkleben. Wenn auf dem Behälterwagen oder auf mitgezogenen Eisenbahnwagen zum Beispiel 6'000 Liter Klebstoff-Gemisch mitgefahren werden, so kann die Maschine 19 Stunden am Stück arbeiten und dabei 400m³ Gleis-Schotter perfekt und gleichmässig verkleben.

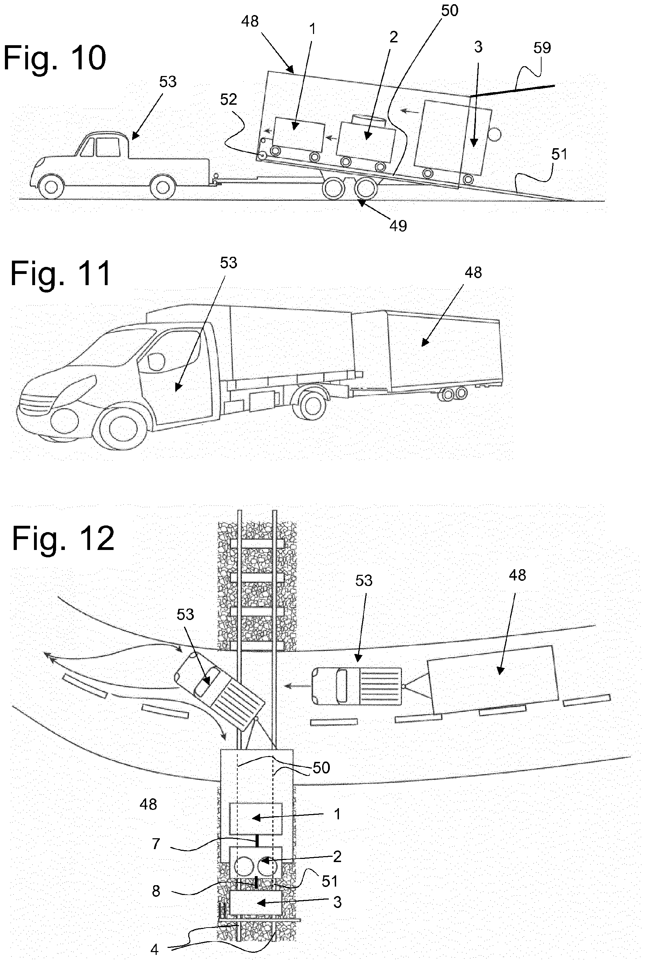

Anhand von Figur 10 wird erläutert, wie das Beladen eines Strassenfahrzeuges mit der Einrichtung aus hier drei Wagen vonstatten geht. Vorteilhaft wird ein Strassenanhänger 48 für PKW-Transporte eingesetzt. Die Figur 10 zeigt einen solchen mit einem Kasten geschlossenen Strassenanhänger 48 mit Tandemachse 49, hier mit geöffneter Heckklappe 59. Er ist im Innern mit Schienen 50 ausgerüstet, von denen ein Teil 51 nach hinten ausziehbar ist, oder die hinten einen ausschwenkbaren Abschnitt 51 aufweisen. Die Schienen 51 können daher über den hinteren Rand des Strassenanhängers 48 hinaus angelegt werden und der Strassenanhänger 48 ist nach hinten kippbar, sodass ein Wagen 1, 2, 3 nach dem anderen, ausgehend von einer ebenen Betonfläche aus auf die Schienen 50, 51 im Strassenanhänger 48 auffahrbar und hernach in den Strassenanhänger 48 ziehbar ist. Dazu dient am besten eine Elektro-Seilzugwinde 52 an der Frontseite des Anhängers 48, wie sie sonst zum Aufladen eines Autos eingesetzt wird. Wie in Figur 10 gezeigt wurde hier zunächst der Sprühwagen 1 in den Strassenanhänger 48 gezogen, dann der Behälterwagen 2 und schliesslich der Energieversorgungswagen 3. Damit sind die Wagen 1, 2, 3 auch in der richtigen Reihenfolge beladen, wie sie am Einsatzort benötigt werden. Nach dem Beladen werden die Schienen 51 im Stassenanhänger versorgt und dieser wird in die Horizontallage geschwenkt. Anschliessend kann der Strassenanhänger 48 mit einem Zugfahrzeug 53 an beliebige Einsatzorte verschoben werden. Dazu kann ein 3.5-Tonnen Strassenfahrzeug eingesetzt werden. Das bringt den Vorteil, dass dieses mit einem PKW-Führerschein gefahren werden darf und keinerlei Sperrzeiten unterworfen ist, etwa einem Nachtfahrverbot oder Sonntagsfahrverbot, und auch nicht der Schwerverkehrsabgabe unterworfen ist, wie das bei LKW vielerorts der Fall ist. Alles dieses bietet eine enorme Flexibilität und Einsatzbereitschaft zu jeder Tages- und Nachtzeit, und das einfache Handling der ganzen Einrichtung ist von bloss zwei Personen zu bewältigen. Es ist keine vielköpfige Arbeitstruppe mehr nötig.

Die Figur 11 zeigt eine ideale Komposition eines 3.5 Tonnen Strassenfahrzeuges 53 und eines zugehörigen Strassenanhängers 48 wie sie sich zum Transportieren der gesamten Einrichtung auf der Strasse eignet. Im Strassenanhänger 48 findet die ganze Einrichtung Platz, ob aus zwei oder drei separaten Schienen-Wagen bestehend, und das Strassenfahrzeug bietet 2 bis 3 Sitzplätze, was für eine ganze Arbeitsequipe genügt, denn mehr als zwei Personen sind nicht nötig, um die Einrichtung vor Ort auszuladen und auf die Eisenbahnschienen aufzusetzen und hernach zu betreiben. Weil ein Strassenfahrzeug der Kategorie bis 3.5 Tonnen Gesamtgewicht einsetzbar ist, bestehen keine Einschränkungen im Verkehr, etwa im Vergleich zu einem LKW von 7.5 Tonnen oder mehr Tonnen Gesamtgewicht. Weder ist eine Fahrtenkontrolle zu führen, noch gibt es Einschränkungen wegen des Gewichts oder der Breite des Strassenfahrzeuges. Für 3.5 Tonnen Fahrzeuge gibt es auch keine Nachtfahrverbote und sie können von beinahe jedermann gefahren werden. Eine Sprühequipe ist also nicht auf eine Person mit LKW-Führerausweis angewiesen. Anstelle eines Zugfahrzeuges kann im Einzelfall auch ein selbstfahrender Tieflade-Fahrzeugtransporter treten, auf den die Wagen 1-3 aufladbar sind.

Die Figur 12 zeigt in einer schematischen Darstellung mit Blick von oben, wie die Einrichtung an einem Einsatzort auf die Schienen 4 aufgesetzt wird. Als idealer Ort, um die Einrichtung auf die Schienen 4 eines Eisenbahn-Schienenstranges zu setzen, erweisen sich Bahnübergänge oder wo immer die Schienenoberseiten eben zu einer Betonplatte oder einem Asphaltbelag oder einem Holzunterlage verlaufen. Hier ist die Situation bei einem Bahnübergang gezeigt. Das Strassenfahrzeug 53 mit seinem Strassenanhänger 48 und der Einrichtung darin kommt hier von rechts angefahren, fährt dann wie mit dem Pfeil eingezeichnet über den Bahnübergang hinaus und manövriert anschliessend den Anhänger 48 rückwärts in die eingezeichnete Position. Der Strassenanhänger 48 wird dann nach hinten gekippt, wie auch schon zum Aufladen der Schienenwagen 1, 2, 3 gezeigt. Die drei Schienenwagen 1, 2, 3 sind hier sichtbar auf dem Anhänger 48 angedeutet. Jetzt werden die Schienen 51 im Strassenanhänger nach hinten ausgefahren oder ausgeschwenkt, sodass sie die inneren Schienen 50 in genau gleicher Richtung verlängern und mit ihren Enden passgenau auf den Eisenbahnschienen 4 abgestellt werden. Hernach wird mit der zum Strassenanhänger 48 gehörigen Seilwinde zunächst der Energieversorgungswagen 3 aus dem Strassenanhänger auf den Schienen 50, 51 langsam nach hinten fahren gelassen, bis er auf den Eisenbahnschienen 4 aufsetzt. Dasselbe erfolgt anschliessend mit dem Behälterwagen 2 und schliesslich mit dem Sprühwagen 1. Jeder einzelne Wagen 1, 2, 3 ist gerade so schwer, dass das leicht von zwei Personen durchführbar ist. Einer bedient die Seilwinde, der andere überwacht das Ausfahren und kann notfalls eingreifen. Sobald alle Wagen 1, 2, 3 auf dem Gleis 4 stehen, werden sie mit den Kupplungsstangen 7, 8 in Form von Doppeldeichseln schwenkbar in alle Richtungen zusammengekoppelt. Danach ist die Einrichtung bereit, um im Bild in Richtung nach oben die Strasse überquerend gefahren zu werden und hernach das Schotterbett auf der gewünschten Seite zu besprühen.

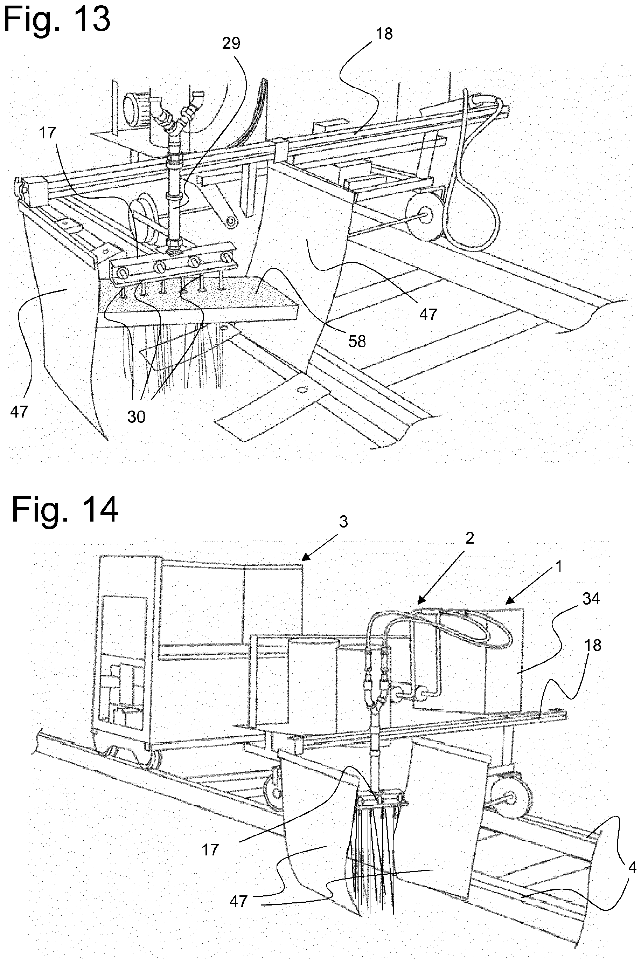

In Figur 13 erkennt man die Front des Sprühwagens 1 im Einsatz. Vorne am Sprühwagen 1 erkennt man den Ausleger 18 und den daran hängenden Sprühbalken 17, sowie auf dessen beiden Seiten eine Blende 47 in Form einer Kunststoff-Matte, welche das Sprühen seitlich genau begrenzt. Der Sprühbalken 17 ist mit einer Anzahl Düsen 30 ausgestattet, sodass verschiedene Sprühbilder des Klebstoff-Gemisches gesprüht werden können. Im gezeigten Bild werden die Sprühstrahlen durch einen Filter 58 gesprüht, der indessen nicht in jedem Fall nötig ist. Der Sprühbalken 17 kann horizontal längs des Auslegers und auch vertikal motorgesteuert verschiebbar sein.

In Figur 14 ist eine Komposition aus zwei Schienenwagen dargestellt, nämlich einem einteiligen Sprüh- 1 und Behälterwagen 2 sowie dem Energieversorgungswagen 3 dargestellt. Der Blick auf die Front des im Einsatz stehenden Sprühwagens 1 zeigt, wie der Sprühbalken mit seinen Düsen 30 das Klebstoffgemisch unten auf das Schotterbett sprüht. Es kann genau bestimmt werden, wieviele Gramm Klebstoff pro Laufmeter bei einer bestimmten Sprühbreite und Fahrgeschwindigkeit ausgebracht wird, und es auch kann bestimmt werden, welches Sprühbild am besten geeignet ist, hier etwa wie ein flacher Sprühvorhang oder auch ein Sprühkegel, je nach den Verhältnissen. Links und rechts des Sprühbalkens 17 sind Blenden 47 montiert, in Form von Gummilappen, sodass der Sprühbereich seitlich sicher begrenzt ist. Die Steuereinheit 34 der Einrichtung sorgt dafür, dass die gewählten Werte konstant und sicher eingehalten werden. Sollte irgendeine Störung in der Zufuhr einer Komponente A, B auftreten, so wird das anhand der Signale der Durchflussmesser registriert und das Sprühen wird augenblicklich durch Schliessen der Pneumatikventile an den Sprühdüsen 30 gestoppt. Damit ist sichergestellt, dass niemals eine sonst hochgiftige Einzelkomponente in den Grund gelangt. Der Sprühbalken 17 ist um seine Hochachse verschwenkbar am Ausleger 18 montiert und verläuft hier schiefwinklig zum Geleise 4, kann aber auch senkrecht zu diesem eingestellt werden. Seine Höhe über dem Schotterbett kann ebenfalls variiert werden, und es ist klar, dass der Sprühbalken 17 an irgendeine Stelle am Ausleger 18 verschoben werden kann, je nachdem, wo der Sprühstreifen gelegt werden soll. Bei der hier gezeigten Breite ausserhalb der einen Schiene des Schienenstranges rechnet man in den meisten Fällen mit ca. 15 Litern Klebstoffgemisch pro Kubikmeter zu verklebender Schottertrasse. Selbstverständlich kann die Ausbringmenge pro Fläche oder Kubatur frei variiert werden, nach Erfahrungswerten und je nach gewünschter Eindringtiefe des Klebstoffes ins Schotterbett.

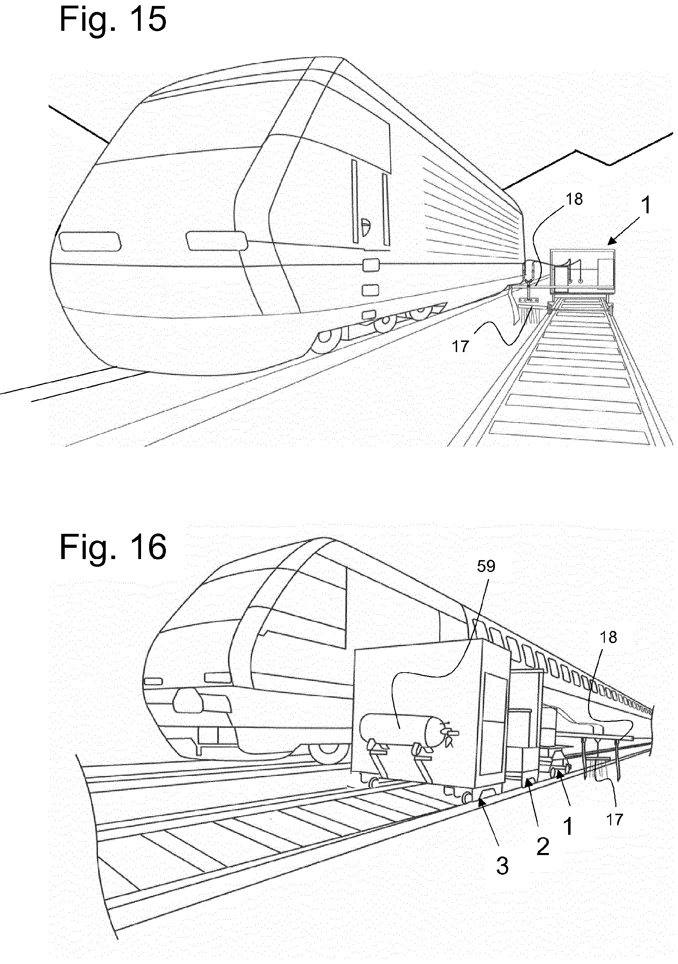

In Figur 15 blickt man auf die Front des Sprühwagens 1, welcher hier die im Bild linke Seite des Schienenstranges, auf welchem die Einrichtung steht, mit Klebstoff besprüht. Die regelbare und laufend überprüfte Fahrgeschwindigkeit der zwei oder drei Wagen der Einrichtung garantiert ein genau ebenmässiges Ausbringen des Klebstoffes. Während des gesamten Arbeitsvorganges kann der Zugverkehr auf einem benachbarten Gleis weitergeführt werden, wie das in der Figur 15 dargestellt ist, wo gerade eine Lokomotive an der Einrichtung vorbeifährt.

In Figur 16 ist die Einrichtung in einer perspektivischen Ansicht mit Blick auf die Komposition von schräg hinten gezeigt, mit einem daneben vorbeifahrenden Zug. Zuhinterst am Energieversorgungswagen 3 ist hier ein Druckluftbehälter 59 montiert. Dieser wird vom bordeigenen Dieselmotor und Kompressor mit Druckluft gespeist und sorgt für einen hinreichenden Druckluftvorrat für zu bedienende Werkzeuge und für die pneumatischen Sicherheits-Ventile bei den Sprühdüsen. Selbstverständlich kann der Druckluftbehälter auch im Innern des Energieversorgungswagens 3 untergebracht sein.

Beim Auftragen des Zweikomponentenklebstoffs mit der erfindungsgemässen Einrichtung konnten qualitativ hochstehende Verklebungen mit wohldefinierter Breite und Tiefe hergestellt werden. Untersuchungen an erfindungsgemäss verfestigtem bzw. verklebtem Gleisschotter haben gezeigt, dass diese kaum Fehlstellen enthalten und weitaus besser halten als herkömmlich behandelter Gleisschotter. Das führt sogar dazu, dass dieses Ausbringungsverfahren von den Schweizerischen Bundesbahnen zertifiziert wurde, und daher auch von Versicherungen anerkannt wird, das heisst wenn es sachgemäss zum Einsatz kommt, können damit verklebte Trassen normal befahren werden, auch wenn sie seitlich abgestochen und ohne Verklebung niemals mehr für eine Befahren mit Zügen stabil genug wären.

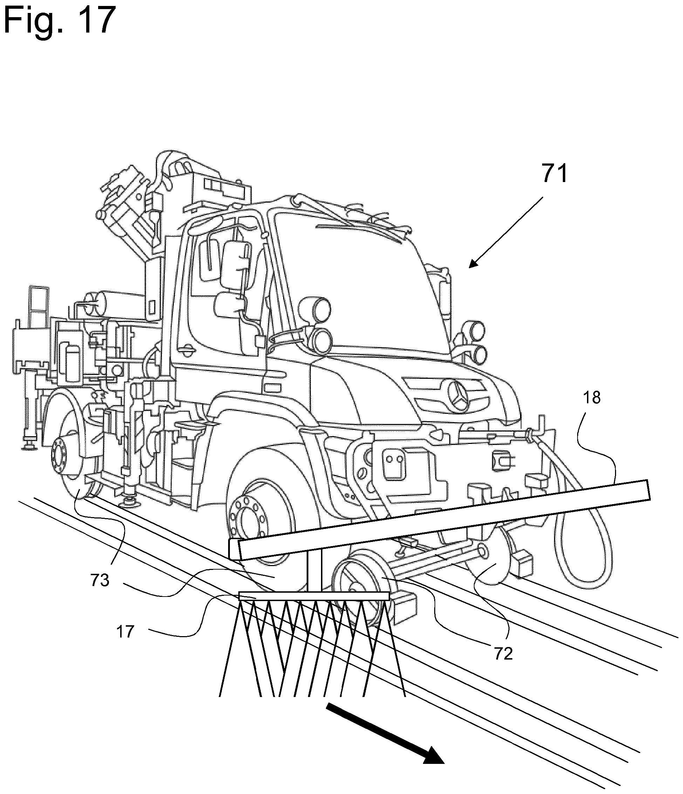

Die Figur 17 zeigt schliesslich ein schienenfähiges Strassenfahrzeug 71, auf dem alle Elemente für die elektrische Energieversorgung und Steuerung für das Pumpen mittels Zahnradpumpen, für das Mischen und kontrollierte Austragen der Komponenten eines Mehrkomponentenklebstoffes über einen vorne angebauten Sprühbalken 17 vorhanden sind. Alle zuvor beschriebenen Elemente, Komponenten, Bestandteile etc. sind auf diesem Fahrzeug 71 vereinigt, also auch der Dieselgenerator für die Stromerzeugung, der Kompressor mit Druckbehälter für einen Vorrat von ca. 30 Litern Druckluft für den Betrieb der mitgeführten Pressluftwerkzeuge sowie der pneumatischen Sicherheits-Ventile bei den Sprühdüsen. Auch eine Heizeinrichtung zum Vorheizen der Komponenten auf die ideale Temperatur gehört dazu. Mit diesem Fahrzeug 71 kann irgendwo direkt auf einen Schienenstrang aufgefahren werden. Dann werden die Schienenräder 72 hydraulisch abgesenkt und verriegelt, wonach das Fahrzeug 71 mit seinen Pneurädern 73 auf den Schienen fährt und durch die Schienenräder 72 auf denselben geführt ist. Vorne am Fahrzeug 71 wird die Ausleger 18 und daran der Sprühbalken 17 vor Ort montiert und die flexiblen Schläuche werden angeschlossen. Alles andere funktioniert im Wesentlichen gleich wie mit einer zweiteiligen oder einer dreiteiligen Komposition wie weiter vorne ausführlich beschrieben. Die Komponenten A, B können direkt auf diesem Fahrzeug 71 mitgeführt werden oder aber es können grössere Mengen von Klebstoff-Komponenten in separaten Behältern zum Beispiel auf einem Eisenbahn-Güterwagen mitgeführt werden, indem dieser Güterwagen am schienenfähigen Strassenfahrzeug 71 angehängt wird und mittels der flexiblen Schläuche aus diesen Behältern auf diesem Eisenbahn-Güterwagen die Komponenten abgepumpt und nach dem Mischen gesprüht werden. Damit ist die Kapazität stark erweiterbar. Es können kilometerlange Strecken sehr rasch von bloss zwei Personen als Bedienpersonal behandelt werden, wobei aber sichergestellt ist, dass das Ausbringen in perfekter Mischung und perfekter Gleichmässigkeit erfolgt. Führt man zum Beispiel 6000 Liter Klebstoff auf einem mitgezogenen Schienenwagen mit, so können in einem Arbeitsgang 400m³ Gleis-Schotter verklebt werden, was in weniger als 20 Stunden erledigt werden kann. Für eine solche Menge braucht man heute mit dem gebräuchlichen händischen Ausbringen allein vor Ort mindestens 100 Stunden, das heisst in der Realität ca. 2 Arbeitswochen, ohne das Mitführen und Antransportieren von vergleichsweise kleinen Chargen von Komponenten mitzurechnen. Und dabei ist aber nicht sichergestellt, dass die Verklebung so gleichmässig erfolgt, dass das Trassee hernach für ein Befahren zertifiziert werden kann und also kein Einbrechen des Trassees unter grosser Last befürchtet werden muss.

Zusammenfassend ist festzustellen, dass diese Einrichtung zum Austragen eines Mehrkomponentenklebstoff gegenüber der gebräuchlichen Applikation von Hand insbesondere bei der Verklebung oder Verfestigung von Schotter bei Eisenbahnanlagen enorme Vorteile mit sich bringt. Insbesondere lässt sie sich höchst flexibel einsetzen, indem sie einfach auf der Strasse an Ort und Stelle transportierbar ist, dort durch bloss zwei Personen auf die Schiene aufsetzbar ist, und hernach ermöglicht sie, die Ausbringungsgeschwindigkeit des Mehrkomponentenklebstoffs massiv zu steigern und die Qualität der Verklebung von Gleisschotter stark zu verbessern.

### Ziffernverzeichnis

- 1: Sprühwagen
- 2: Behälterwagen
- 3: Energieversorgungswagen
- 4: Eisenbahnschienen, Gleis
- 5: Bahnschwellen
- 6: Schotterbett
- 7: Kupplungsdeichsel zwischen 1 und 2
- 8: Kupplungsdeichsel zwischen 2 und 3
- 9: Erste Zufuhrleitung für Komponente A
- 10: Zweite Zufuhrleitung für Komponente B
- 11: Erste Zahnradpumpe für Komponente A
- 12: Zweite Zahnradpumpe für Komponente B
- 13: Elektromotor, Antrieb für 11
- 14: Elektromotor, Antrieb für 12
- 15: Massendurchfluss-Messgerät für Komponente A
- 16: Massendurchfluss-Messgerät für Komponente B
- 17: Sprühbalken
- 18: Ausleger für Sprühbalken
- 19: Pneumatik-Sicherheitsventil für Komponente A
- 20: Pneumatik-Sicherheitsventil für Komponente B
- 21: Steine des Schotterbettes
- 22: Fahrgestell
- 23: Achse des Fahrgestells
- 24: Rad des Fahrgestells
- 25: 24V-Fahrmotor
- 26: Y-förmiger Fitting
- 27: Rückschlagventil für Komponente A
- 28: Rückschlagventil für Komponente B
- 29: Wendelmischer
- 30: Sprühdüsen
- 31: Sprühbild
- 32: Sprühbereich
- 33: Fluid-Austrittsseite
- 34: Steuereinheit
- 35: Steuerleitung für Elektromotor 13
- 36: Steuerleitung für Elektromotor 14
- 37: Signalleitung von Massendurchfluss-Messgerät für Komponente A
- 38: Signalleitung Massendurchfluss-Messgerät für Komponente B
- 39: Signalleitung von Steuereinheit 34 zu Pneumatikventil 19
- 40: Signalleitung von Steuereinheit 34 zu Pneumatikventil 20
- 41: Steuerleitung für Fahrmotor 42
- 42: Einziger Wagen für Behälter und Energieversorgung
- 43: Fahrgeschwindigkeitssensor
- 44: Singalleitung Fahrgeschwindigkeitssensor zu Steuereinheit
- 45: Sensor für die Beschaffenheit des zu besprühenden Bereichs
- 46: Signalleitung von Sensor 45 an die Steuereinheit 34
- 47: Blenden links und rechts des Sprühbalkens, in Form von Gummimatten
- 48: Anhänger
- 49: Tandemachse
- 50: Schienen im Innern des Anhängers
- 51: ausziehbare oder ausschenkbare Schienen am Anhänger
- 52: Seilwinde am Anhänger
- 53: Zugfahrzeug
- 54: Behälter auf dem Güterwagen
- 55: Rangierlok
- 56: Auffangwannen
- 57: Arbeitsfläche, Werkbank
- 58: Sieb für das Klebstoffgemisch
- 59: Druckluftbehälter
- 60: Erster Behälter für Komponente A
- 61: Zweiter Behälter für Komponente B
- 62: Krafthebel zum Anheben des Sprühwagens
- 63: Drehrad für den Krafthebel 62
- 64: Lasthebel zum Anheben des Sprühwagens
- 65: Stützrad zum Anheben des Sprühwagens
- 66: Verbindungsachse zwischen den beiden Stützrädern 65
- 67: Kranausleger
- 68: Flaschenzug
- 69: Schalttableau für Generator, Dieselmotor
- 70: Belüftungsrohr für Ventilator zur Auffangwanne
- 71: Schienenfähiges Strassenfahrzeug
- 72: Schienenräder
- 73: Pneuräder

## Patentansprüche

1. Einrichtung zum Antransportieren von Mehrkomponentenklebstoffen aus mindestens zwei fluidförmigen Komponenten (A, B) sowie aller nötigen Elemente für deren Ausbringen auf ein körniges Schotterbett (6) eines Eisenbahn-Schienenstranges (4) an einen Einsatzort, und zum Mitführen und Austragen dieser Mehrkomponentenklebstoffe am Einsatzort auf das dortige körnige Schotterbett (6) des Eisenbahn-Schienenstranges (4) ab getrennt gelagerten Komponenten (A, B),
***dadurch gekennzeichnet, dass***
diese Einrichtung sowohl strassentransportierbar wie auch schienentauglich ist, indem sie entweder ein schienentaugliches Strassenfahrzeug (71) oder mindestens ein strassentransportfähiges Schienenfahrzeug (1, 2, 3) mit zur Einrichtung gehörigem Strassenfahrzeug (53) oder Strassenanhänger (58) für seinen Transport auf der Strasse einschliesst, mit in beiden Fällen spurwechselfähigen Schienenrädern (72, 24), und wobei dieses Strassen- oder Schienenfahrzeug alle nötigen Elemente für die elektrische Energieversorgung und Steuerung für das Pumpen der Komponenten (A, B) mittels Zahnradpumpen, für ihr Mischen und für ihr kontrolliertes Austragen als Mehrkomponentenklebstoff über eine zur Einrichtung gehörige Sprüheinheit einschliesst, die einen Sprühbalken (17) aufweist und an einem der Fahrzeuge (71, 1) angebaut ist, welches als Sprühwagen dient, und welcher Sprühbalken (17) mit diesen Komponenten (A, B) versorgbar ist, und wobei diese Komponenten (A, B) aus mindestens zwei separaten Behältern (60, 61) pumpbar sind, die in zugehörigen Auffangwannen (56) auf dem schienentauglichen Strassenfahrzeug (71) oder auf einem der strassentransportfähigen Schienenfahrzeug (2) der Einrichtung mitführbar sind, wobei die Komponenten (A, B) über zugehörige flexible Schlauchleitungen (9, 10) über je eine Zahnradpumpe und einen Massendurchflussmesser (15, 16) zu einem Mischer (29) und dann zu diesem Sprühbalken (17) an der Einrichtung pumpbar sind, und welcher Sprühbalken (17) der Sprüheinheit am Sprühwagen automatisch steuerbar horizontal und vertikal motorgetrieben verschiebbar und in allen Richtungen schwenkbar an einem Ausleger (18) gelagert ist, der sich quer über die Fahrzeugbreite des Sprühwagens erstreckt, zum geschwindigkeitsabhängig kontrollierten Ausbringen des Klebstoff-Gemisches in mehreren wählbaren Sprühbildern.

2. Einrichtung zum Austragen von Mehrkomponentenklebstoffen aus mindestens zwei fluidförmigen Komponenten (A, B) auf ein körniges Schotterbett (6) eines Eisenbahn-Schienenstranges (4) ab getrennt gelagerten Komponenten (A, B), ***dadurch gekennzeichnet, dass***
die Einrichtung mindestens zwei in einem einzigen Strassenfahrzeug (53) oder Strassenanhänger (48) in ihrer Gesamtheit strassentransportierbare, auf Schienen (4, 52, 53) fahrbare Wagen (1, 2 3) mit spurwechselfähigen Schienenrädern (24) einschliesst, welche zugkraftschlüssig mit Deichseln (7,8) zusammenkoppelbar sind und mit Schläuchen und Kabeln für ihr funktionales Zusammenwirken verbindbar sind, wobei einer der Wagen (1, 2, 3) als Sprühwagen (1) ausgebildet ist und alle nötigen Elemente für das Pumpen, Mischen und kontrollierte Austragen der Komponenten (A, B) über flexible Schlauchleitungen (9, 10) an eine Sprüheinheit mit Sprühbalken (17) enthält, und ein weiterer Wagen (2) oder wahlweise ein zusätzlicher dritter (3), zur Einrichtung gehöriger Wagen alle weiteren Elemente enthält, nämlich zwei separate, in Auffangwannen (56) stehende Behälter (60, 61), mit darin den einzusetzenden, mitführbaren fluidförmigen und zu mischenden Komponenten (A, B), und einen Diesel-Stromgenerator mit 400 V für die Energieversorgung und eine Steuereinheit (34) für die elektrische Steuerung, und weiter dass die Einrichtung ein zugehöriges Fahrzeug (53, 48) mit nach hinten unten kippbarer Ladefläche einschliesst, auf welcher Ladefläche Schienen (50,51) nach hinten über das Ende der Ladefläche hinaus ausziehbar sind, sodass die Wagen (1, 2, 3) auf diesen Schienen (50, 51) auf die Ladefläche ziehbar sind und in umgekehrter Richtung auf die Gleise (4) eines Schienenstranges absetzbar sind.

3. Einrichtung (10) nach Anspruch 1,
***dadurch gekennzeichnet, dass***
die Einrichtung aus zwei getrennten, in einem einzigen Strassenfahrzeug (53) oder Strassenanhänger (48) in ihrer Gesamtheit strassentransportfähigen, auf Schienen fahrbaren Wagen (1, 58) mit spurwechselfähigen Schienenrädern (24) besteht, welche mit einer Deichsel (7) zugkraftschlüssig zusammenkoppelbar sind und mit Schläuchen und Kabeln für ihr funktionales Zusammenwirken verbindbar sind, wobei der erste Wagen als Sprühwagen (1) ausgebildet ist und alle nötigen Elemente für das Pumpen, Mischen und kontrollierte Austragen der über zur Einrichtung gehörige flexible Schlauchleitungen (9, 10) zugeführten Komponenten (A, B) an die Sprüheinheit enthält, und der zweite Wagen (42) als Tankwagen mit Auffangwannen (56) zum Hineinstellen und Heizen der separaten Behälter (60, 61) mit den einzusetzenden fluidförmigen und zu mischenden Komponenten (A, B) ausgeführt ist, sowie für die Energieversorgung mit einem Diesel-Stromgenerator sowie seiner Starter-Batterie und einer Steuereinheit (34) für die elektrische Steuerung aller elektrisch betriebenen Komponenten ausgerüstet ist.

4. Einrichtung (10) nach Anspruch 1,
***dadurch gekennzeichnet, dass***
die Einrichtung aus zwei getrennten, in einem zugehörigen einzigen Strassenfahrzeug (53) oder Strassenanhänger (48) in ihrer Gesamtheit strassentransportfähigen, auf Schienen fahrbaren Wagen (1,58) mit spurwechselfähigen Schienenrädern (24) besteht, welche fahrbaren Wagen (1,48) mit einer Deichsel (7) zugkraftschlüssig zusammenkoppelbar sind und mit Schläuchen und Kabeln für ihr funktionales Zusammenwirken verbindbar sind, wobei der erste Wagen als Behälter- (2) und Sprühwagen (1) ausgebildet ist, mit Auffangwannen (56) zum Hineinstellen und Heizen der separaten Behälter (60, 61) mit den einzusetzenden fluidförmigen und zu mischenden Komponenten (A, B), sowie ausgerüstet mit allen nötigen Elementen für das Pumpen, Mischen und kontrollierte Austragen der über flexible Schlauchleitungen (9, 10) aus den Behältern (60,61) gepumpten Komponenten (A, B) mittels einer Sprüheinheit, und der zweite Wagen für die Energieversorgung mit einem Diesel-Stromgenerator mit seiner Starter-Batterie und einer Steuereinheit (34) für die elektrische Steuerung aller elektrisch betriebenen Komponenten ausgerüstet ist.

5. Einrichtung (10) nach Anspruch 1,
***dadurch gekennzeichnet, dass***
die Einrichtung aus drei getrennten, in einem einzigen zugehörigen Strassenfahrzeug (53) oder Strassenanhänger (48) in ihrer Gesamtheit strassentransportfähigen, auf Schienen (4, 50, 51) fahrbaren Wagen (1, 2, 3) mit spurwechselfähigen Schienenrädern (24) besteht, welche zugkraftschlüssig mit Deichseln (7, 8) zusammenkoppelbar sind und mit Schläuchen und Kabeln für ihr funktionales Zusammenwirken verbindbar sind, wobei der erste Wagen als Sprühwagen (1) ausgebildet ist und alle nötigen Elemente für das Pumpen, Mischen und kontrollierte Austragen der über flexible Schlauchleitungen (9, 10) zugeführten Komponenten (A, B) an eine Sprüheinheit enthält, der zweite Wagen als Behälterwagen (2) mit Auffangwannen (56) zum Hineinstellen und Heizen der separaten Behälter (60, 61) mit den einzusetzenden fluidförmigen und zu mischenden Komponenten (A, B) ausgeführt ist, und der dritte Wagen als Energieversorgungs-Wagen (3) mit einem Diesel-Stromgenerator mit seiner Starter-Batterie und einer Steuereinheit (34) für die elektrische Steuerung aller elektrisch betriebenen Komponenten ausgerüstet ist.

6. Einrichtung nach einem der vorangehenden Ansprüche, ***dadurch gekennzeichnet, dass***
die Sprüheinheit am Sprühwagen (1) einen quer zur Fahrrichtung des Wagens verlaufenden Sprühbalken (17) an der Aussenseite dieses Sprühwagens (1) aufweist, welcher horizontal und vertikal motorgesteuert verschiebbar und in allen Richtungen schwenkbar an einem Ausleger (18) gelagert ist, der sich quer über mehr als die Breite des Sprühwagens (1) erstreckt und eine Vielzahl von Düsen (30) zur Erzeugung verschiedener Sprühbilder (31) aufweist, und der Behälterwagen (2) eine selbstregulierende Heizung für das Innere der Auffangwannen (56) aufweist, zum Halten der Komponenten (A, B) auf einer SollTemperatur, und dass Batterien zum Zwischenspeichern von elektrischer Energie vorhanden sind, und dass die Steuereinheit (34) speicherprogrammierbar ist, für verschiedene Ausbringprogramme und für die Versorgung und Steuerung der Heizeinrichtung, der Zahnradpumpen (11, 12) für die Komponenten (A, B), der Bewegung der Sprühdüsen (30) und der Kontrollgeräte mit ihren Sensoren (43, 45) ausgelegt ist.

7. Einrichtung nach einem der vorhergehenden Ansprüche, ***dadurch gekennzeichnet, dass***
das zugehörige Strassenfahrzeug (53) für den Strassentransport der Einrichtung ein selbstfahrender Tieflade-Fahrzeugtransporter oder ein Doppelachs-Strassenanhänger (48) mit Ladefläche für den Fahrzeugtransport und Stahlseilwinde (52) ist, wobei die Ladefläche elektrisch oder hydraulisch nach hinten unten neigbar ist, und auf der Ladefläche Schienen (50, 51) angeordnet sind, und wobei weitere Schienen (51) nach hinten über die Ladefläche hinaus in geneigter Lage der Ladefläche soweit ausziehbar oder ausschwenkbar sind, dass ihre hinteren Enden auf dem Boden oder auf den Schienen (4) eines am Boden verlaufenden Schienenstranges eine Auflage finden, wonach die Wagen (1, 2, 3) mit ihren Schienenrädern (24) über die Schienen (51) auf der Ladefläche mittels der Stahlseilwinde (52) in den Anhänger (48) ziehbar sind und in umgekehrter Richtung auf einen Schienenstrang am Boden absetzbar sind.

8. Einrichtung nach einem der vorangehenden Ansprüche, ***dadurch gekennzeichnet, dass***
der Sprühwagen (1) Zuleitungen (9, 10) zur Förderung der fluidförmigen Komponenten (A, B) umfasst, sowie eine Mischereinheit (29) zur Vermischung der fluidförmigen Komponenten (A, B) zu einem Klebstoffgemisch, und wobei beide Zuleitungen (9, 10) mit einer steuerbaren Zahnradpumpe (11, 12) zur Steuerung der Durchflussrate und einem mit einem Massendurchfluss-Messgerät (15,16) für die jeweilige fluidförmigen Komponente (A, B) durch die jeweilige Zuleitung (9, 10) ausgerüstet sind und die Steuereinheit (34) so ausgestaltet ist, dass auf Basis der erfassten Durchflussraten über mindestens eine Ausgangsgrösse eine Gesamtförderrate und/oder ein Mischungsverhältnis zwischen den fluidförmigen Komponenten (A, B) einhaltbar ist.

9. Einrichtung nach einem der Ansprüche 1 bis 6, ***dadurch gekennzeichnet, dass***
die Steuereinheit (34) so ausgebildet ist, dass mit ihr über mindestens zwei Ausgangsgrössen die Gesamtförderrate und das Mischungsverhältnis zwischen den fluidförmigen Komponenten (A, B) regulierbar ist.

10. Einrichtung nach einem der vorangehenden Ansprüche, ***dadurch gekennzeichnet,* dass**
die Steuereinheit (34) so ausgestaltet ist, dass die Durchflussraten der beiden fluidförmigen Komponenten (A, B) in Abhängigkeit der Fahrgeschwindigkeit durch deren Ermittlung mittels Fahrgeschwindigkeitssensor (43) des Sprühwagens (1) steuerbar sind.

11. Einrichtung nach einem der vorangehenden Ansprüche, ***dadurch gekennzeichnet,* dass**
der Sprühbalken (17) mehrere Düsen (30) einschliesst, die wahlweise beschickbar sind, zur Erzeugung eines flächigen, vorhangartigen oder kegelförmigen Sprühbildes (31).

12. Verfahren zum Betrieb einer Einrichtung nach einem der vorangehenden Ansprüche,
***dadurch gekennzeichnet,* dass**
das schienenfähige Strassenfahrzeug selbstfahrend oder die getrennten Wagen (1, 2, 3) auf einem einzigen Fahrzeug oder Anhänger (48) strassentransportiert zum Einsatzort gebracht werden, und dort das schienenfähige Strassenfahrzeug auf den Schienenstrang gefahren und in Betrieb genommen wird, oder das Strassenfahrzeug bzw. der Strassenanhänger (48) auf dem Schienenstrang in Position gebracht wird und hernach die Wagen (1, 2, 3) auf die Schienen (4) einer zu behandelnden Schienentrasse abgesetzt und hernach zugkraftschlüssig und gelenkig mittels Deichseln (7, 8) zusammengekoppelt werden und für das automatisch gesteuerte Pumpen, Mischen und Austragen des Klebstoffes in Betrieb genommen werden.

13. Verfahren nach Anspruch 11,
***dadurch gekennzeichnet,* dass**
während es Austragens des Klebstoffes die Durchflussraten der fluidförmigen Komponenten durch laufendes Messen der Durchflussraten in der Steuereinheit (34) der Einrichtung erfasst und durch Vergleich der Messdaten mit einem definierten Sollwert und mindestens einer Ausgangsgrösse verglichen werden, insbesondere mit einem Ausgangssignal zur Steuerung der Gesamtförderrate der Zahnradpumpen (11, 12) und/oder des Mischungsverhältnisses der fluidförmigen Komponenten (A, B) für die laufende Überwachung des Austrags.

14. Verfahren nach einem der Ansprüche 11 bis 12,
***dadurch gekennzeichnet,* dass**
das Verhältnis der Durchflussraten der fluidförmigen Komponenten (A, B) durch laufenden Vergleich mit einem in der Steuereinheit (34) abgespeicherten Verhältnissollwert kontrolliert wird und die erste und/oder die zweite Ausgangsgrösse in Abhängigkeit der Differenz zwischen dem bestimmtem Verhältnis und dem Verhältnissollwert von der Steuereinheit (34) angepasst und der Ausgangswert zur Steuerung der Zahnrad-Pumpen (11, 12) und ihrer Durchflussraten verwendet wird, oder dass bei einer Abweichung der ermittelten Durchflussraten und/oder bei einer Abweichung des Verhältnis der ermittelten Durchflussraten um mehr als einen vorgegebenen Maximalwert einer Abweichung die Austragung und/oder Förderung der fluidförmigen Komponenten (A, B) automatisch von der Steuereinheit (34) veranlasst durch Stoppen der Zahnradpumpen (11, 12) und Schliessen der Pneumatikventile (19, 20) gestoppt wird.

15. Verwendung der Einrichtung nach einem der Ansprüche 1 bis 10 für das Transportieren der Einrichtung an ihren Einsatzort, Auffahren des schienenfähigen Fahrzeuges oder Absetzen der Schienenwagen (1, 2, 3) vom Strassenfahrzeug (54) oder Strassenanhänger (58) auf den Schienenstrang (4) der zu behandelnden Schienenstrasse und zum Austragen von Mehrkomponenten-Klebstoffen mit mindestens zwei fluidförmigen Komponenten (A, B) auf das Schotterbett (6) dieser Eisenbahntrasse zwecks abschnittweiser Verklebung desselben über die ganze Trassenbreite oder über einen Teil der Trassenbreite.

## Claims

1. A device for transporting multi-component adhesives of at least two fluidic components (A, B) as well as all necessary elements for spreading them from separately stored components (A, B) to a granular ballast bed (6) of a railway track (4) at a site of use, and for carrying along and discharging these multi-component adhesives at the site of use onto the granular ballast bed (6) of the railway stretch of rails (4) there,
***characterized in that***
said device is both road transportable and rail-suitable by comprising either a rail-suitable road vehicle (71) or at least one road-transportable rail vehicle (1, 2, 3) with a road vehicle (53) or road trailer (58) belonging to the device for its transport by road, with in both cases gauge-changeable rail wheels (72, 24), and wherein this road or rail vehicle comprises all necessary elements for the electric power supply and control for pumping the components (A, B) by means of gear pumps, for their mixing and for their controlled discharge as multi-component adhesive via a spray unit belonging to the device, which has a spray bar (17) and is mounted on one of the vehicles (71, 1), which serves as spray wagon, and which spray bar (17) can be supplied with these components (A, B), and these components (A, B) being pumpable from at least two separate containers (60, 61) which can be carried in associated catch bins (56) on the rail-suitable road vehicle (71) or on one of the road-transportable rail vehicle (2) of the device, wherein the components (A, B) are pumpable via associated flexible hose lines (9, 10) each by a gear pump and a mass flow meter (15, 16) to a mixer (29) and then to this spray bar (17) on the device, and which spray bar (17) of the spray unit is horizontally and vertically movable in an automatically controlled motor-driven manner at the spray wagon and mounted rotatable in all directions on a cantilever (18), which extends across the vehicle width of the spraying wagon, for the speed-dependent controlled spreading of the adhesive mixture in a plurality of selectable spray patterns.

2. A device for discharging multi-component adhesives of at least two fluidic components (A, B) from separately stored components (A, B) onto a granular ballast bed (6) of a railway stretch of rails (4)
***characterized in that***
the device comprises at least two wagons (1, 2, 3) drivable on rails (4, 52, 53) with gauge-changeable rail wheels (24), said wagons being road-transportable in their entirety in a single road vehicle (53) or road trailer (48), which can be coupled using drawbars (7, 8) in a tension-locking manner and can be connected to hoses and cables for their functional interaction, wherein one of the wagons (1, 2, 3) is designed as a spray wagon (1) and contains all necessary elements for the pumping, mixing and controlled discharging of the components (A, B) via flexible hose lines (9, 10) to a spray unit having a spray bar (17), and a further wagon (2) or optionally an additional third wagon (3) belonging to the device contains all further elements, namely two separate containers (60, 61), which stand in catch basins (56), containing the transportable fluidic components (A, B) to be used and mixed, and a diesel power generator with 400 V for the power supply and a control unit (34) for the electric control, and further that the device includes an associated vehicle (53, 48), comprising a downwardly tiltable loading area in the rear, on which loading area rails (50, 51) are extendable to the rear beyond the end of the loading area, so that the wagons (1, 2, 3) can be pulled onto the loading area on these rails (50, 51) and can be place down in the opposite direction onto the tracks of a stretch of rails (4).

3. The device (10) according to claim 1,
***characterized in that***
the device consists of at least two separate wagons (1, 58) drivable on rails with gauge-changeable rail wheels (24), said wagons being road-transportable in their entirety in a single road vehicle (53) or road trailer (48), which can be coupled using a drawbar (7) in a tension-locking manner and can be connected to hoses and cables for their functional interaction, wherein the first wagon is designed as a spray wagon (1) and contains all necessary elements for the pumping, mixing and controlled discharging of the components (A, B) via flexible hose lines (9, 10) belonging to the device to the spray unit, and the second wagon (42) is equipped as a tank wagon, having catch basins (56) for inserting and heating the separate containers (60, 61) with the fluidic components (A, B) to be used and mixed, as well as for the power supply with a diesel power generator and its starter battery and a control unit (34) for the electric control of all electrically operated components.

4. The device (10) according to claim 1,
***characterized in that***
the device consists of at two separate wagons (1, 58) drivable on rails and having gauge-changeable rail wheels (24), said wagons being road-transportable in their entirety in an associated single road vehicle (53) or road trailer (48), which drivable wagons (1, 48) can be coupled using a drawbar (7) in a tension-locking manner and can be connected to hoses and cables for their functional interaction, wherein the first wagon is designed as a container (2) and spray wagon (1) having catch basins (56) for inserting and heating the separate containers (60, 61) with the fluidic components (A, B) to be used and mixed as well as all equipped with all necessary elements for the pumping, mixing and controlled discharging of the components (A, B) from the containers (60, 61) via flexible hose lines (9, 10) by means of a spray unit, and the second wagon is equipped with a diesel power generator for the power supply having its starter battery and a control unit (34) for the electric control of all electrically operated components.

5. The device (10) according to claim 1,
***characterized in that***
the device consists of at three separate wagons (1, 2, 3) drivable on rails (4, 50, 51) and having gauge-changeable rail wheels (24), said wagons being road-transportable in their entirety in an associated single road vehicle (53) or road trailer (48), which can be coupled in a tension-locking manner using drawbars (7, 8) and can be connected to hoses and cables for their functional interaction, wherein the first wagon is designed as a spray wagon (1) and contains all necessary elements for the pumping, mixing and controlled discharging of the components (A, B) via flexible hose lines (9, 10) to a spray unit, the second wagon is designed as a container wagon (2), having catch basins (56) for inserting and heating the separate containers (60, 61) with the fluidic components (A, B) to be used and mixed, and the third wagon is equipped as a power supply wagon (3) the power supply with a diesel power generator having its starter battery and a control unit (34) for the electric control of all electrically operated components.

6. The device according to any of the preceding requirements,
***characterized in that***
the spray unit on the spraying wagon (1) has a spraying bar (17) running transversely to the direction of travel of the wagon on the outside of this spraying wagon (1), which is horizontally and vertically moveable by motor control and mounted rotatable in all directions on a cantilever (18) which extends transversely beyond the width of the spraying wagon (1) and has a plurality of nozzles (30) for creating different spray patterns (31), and the container wagon (2) has a self-regulating heater for the interior of the catch basins (56), for maintaining the components (A, B) at a set temperature, and that batteries are provided for temporarily storing electric power, and that the control unit (34) is programmable in memory, is designed for different application programs and for supplying and controlling the heating device, the gear pumps (11, 12) for the components (A, B), the movement of the spray nozzles (30) and the control devices with their sensors (43, 45).

7. The device according to any the preceding claims,
***characterized in that***
the associated road vehicle (53) for transport the device by road is a self-propelled low-bed vehicle transporter or a double-axle road trailer (48) having a loading area for vehicle transport and steel cable winch (52), wherein the loading area is electrically or hydraulically downwardly inclinable to the rear and rails (50, 51) are arranged on the loading area, and wherein further rails (51) are extendable or pivotable to the rear beyond the loading area in an inclined position of the loading area as far as possible, that their rear ends are supported on the floor or on the rails (4) of a stretch of rails running on the ground, whereby the wagons (1, 2, 3) can be pulled on the loading area over the rails (51) by their rail wheels (24) into the trailer (48) by means of the steel cable winch (52) and can be lowered in the opposite direction onto a stretch of rails on the ground.

8. The device according to any of the preceding claims,
***characterized in that***
the spraying wagon (1) comprises feed lines (9, 10) for conveying the fluidic components (A, B) as well as a mixer unit (29) for mixing the fluidic components (A, B) to form an adhesive mixture, and wherein both feed lines (9, 10) are equipped with a controllable gear pump (11, 12) for controlling the flow rate and with a mass flow meter (15, 16) for the respective fluidic component (A, B) through the respective feed line (9, 10) and the control unit (34) is designed such that a total flow rate and/or a mixing ratio between the fluidic components (A, B) can be maintained on the basis of the recorded flow rates via at least one output variable.

9. The device according to any of claims from 1 to 6,
***characterized in that***
the control unit (34) is designed such that the total delivery rate and the mixing ratio between the fluidic components (A, B) can be regulated with said control unit via at least two output variables.

10. The device according to any of the preceding claims,
***characterized in that***
the control unit (34) is designed such that the flow rates of the two fluidic components (A, B) can be controlled as a function of the travel speed by determining them by means of the travel speed sensor (43) of the spraying wagon (1).

11. The device according to any of the preceding claims,
***characterized in that***
the spray bar (17) comprises a several nozzles (30) which can optionally be fed to produce a flat, curtain-like or conical spray pattern (31).

12. The method for operating a device according to any of the preceding claims,
***characterized in that***
the rail-compatible road vehicle is self-propelled or the separate carriages (1, 2, 3) are transported by road on a single vehicle or trailer (48) to the place of use, and there the rail-compatible road vehicle is driven onto the rail line and put into operation, or the road vehicle is brought into operation, the road trailer (48) is brought into position on the rail line and the carriages (1, 2, 3) are then set down on the rails (4) of a rail line to be treated and afterwards coupled together in a force-locking and hinged manner by means of drawbars (7, 8) and are put into operation the automatically controlled pumping, mixing and discharge of the adhesive.

13. The method according to claim 11,
***characterized in that***
while the adhesive is being discharged, the flow rates of the fluidic components are detected by continuously measuring the flow rates in the control unit (34) of the device and compared by comparing the measured data with a defined setpoint and at least one output variable, in particular with an output signal for controlling the total delivery rate of the gear pumps (11, 12) and/or the mixing ratio of the fluidic components (A, B) for continuously monitoring the discharge.

14. The method according to any of claims 11 to 12,
***characterized in that***
the ratio of the flow rates of the fluidic components (A, B) is controlled by continuous comparison with a ratio setpoint stored in the control unit (34), and the first and/or the second output variable is adapted by the control unit (34) as a function of the difference between the determined ratio and the ratio setpoint, and the output value is used to control the gear pumps (11, 12) and their flow rates, or that in the event of a deviation of the determined flow rates and/or a deviation of the ratio of the determined flow rates by more than a predetermined maximum value of a deviation, the discharge and/or conveying of the fluidic components (A, B) is automatically stopped by the control unit (34) by stopping the gear pumps (11, 12) and closing the pneumatic valves (19, 20).

15. The use of the device according to any of claims 1 to 10 for transporting the device to its place of use, driving up the railway-compatible vehicle or setting down the rail wagons (1, 2, 3) from the road vehicle (54) or road trailer (58) onto the stretch of rails (4) of the rail track to be treated and for discharging multi-component adhesives having at least two fluidic components (A, B) onto the ballast bed (6) of this rail track in order to bond it in sections over the entire track width or over part of the track width.

## Revendications

1. Dispositif pour le transport de colles à plusieurs composants composées d'au moins deux composants fluides (A, B) et de tous les éléments nécessaires à leur application sur un lit de ballast granulaire (6) d'une voie ferrée (4) vers un site d'utilisation, ainsi que pour l'acheminement et le déchargement de ces colles à plusieurs composants sur le site d'utilisation sur le lit de ballast granulaire (6) de la voie ferrée (4) à partir de composants (A, B) stockés séparément,
***caractérisé en ce que***
ce dispositif est à la fois transportable sur route et sur rail, **en ce qu'**il comprend soit un véhicule routier (71) adapté au transport sur rail, soit au moins un véhicule ferroviaire (1, 2, 3) transportable sur route avec un véhicule routier (53) ou une remorque routière (58) appartenant au dispositif pour son transport sur route, avec des roues ferroviaires (72, 24) qui peuvent changer de voie dans les deux cas, et dans lequel ledit véhicule routier ou ferroviaire comprend tous les éléments nécessaires à l'alimentation en énergie électrique et à la commande pour le pompage des composants (A, B) au moyen de pompes à engrenages, pour leur mélange et pour leur décharge contrôlée sous la forme d'un adhésif à plusieurs composants par l'intermédiaire d'une unité de pulvérisation appartenant au dispositif, laquelle unité de pulvérisation comprend une barre de pulvérisation (17) et est montée sur l'un des véhicules (71, 1) qui sert de chariot de pulvérisation, et laquelle barre de pulvérisation (17) est reliée auxdits composants (A, B) au moyen de ladite unité de pulvérisation, B), et dans lequel ces composants (A, B) peuvent être pompés à partir d'au moins deux récipients séparés (60, 61), qui peuvent être transportés dans des bacs de collecte associés (56) sur le véhicule routier compatible avec le rail (71) ou sur l'un des véhicules ferroviaires transportables sur route (2) du dispositif, les composants (A, B) étant alimentés par des conduites flexibles associées (9, 10) par l'intermédiaire d'une pompe à engrenages et d'un débitmètre massique (15, 16) peut être pompée vers un mélangeur (29) et ensuite vers cette barre de pulvérisation (17) du dispositif, et laquelle barre de pulvérisation (17) de l'unité de pulvérisation sur le chariot de pulvérisation est automatiquement déplaçable de manière contrôlée horizontalement et verticalement par moteur et est montée sur un bras (18), qui s'étend transversalement sur la largeur du véhicule du chariot de pulvérisation, de manière à pouvoir pivoter dans toutes les directions, pour l'application contrôlée en fonction de la vitesse du mélange adhésif dans plusieurs modèles de pulvérisation sélectionnables.

2. Dispositif pour la distribution de colles à plusieurs composants consistant en au moins deux composants fluides (A, B) sur un lit de ballast granulaire (6) d'une voie ferrée (4) à partir de composants (A, B) stockés séparément
***caractérisé en ce que***
le dispositif comprend au moins deux wagons (1, 2, 3) qui sont transportables sur route dans leur intégralité dans un seul véhicule routier (53) ou une seule remorque routière (48), qui sont mobiles sur des rails (4, 52, 53) et qui ont des roues (24) à voie interchangeable, qui peuvent être couplées ensemble avec des timons (7, 8) de manière à assurer une force de traction et qui peuvent être reliées à des tuyaux et des câbles pour leur interaction fonctionnelle, dans laquelle l'un des chariots (1, 2, 3) est conçu comme un chariot de pulvérisation (1) et contient tous les éléments nécessaires pour le pompage, le mélange et la décharge contrôlée des composants (A, B) via des tuyaux flexibles (9, 10) vers une unité de pulvérisation avec barre de pulvérisation (17), et un autre chariot (2) ou éventuellement un troisième (3) supplémentaire, pour l'équipement des wagons associés contient tous les autres éléments, à savoir deux conteneurs séparés (60, 61) placés dans des bacs collecteurs (56), avec les composants fluidiques (A, B) à y insérer, à y transporter et à y mélanger, ainsi qu'un générateur diesel de 400 V pour l'alimentation électrique et une unité de commande (34) pour la commande électrique, et en outre **en ce que** le dispositif comprend un véhicule associé (53, 48) avec une surface de chargement qui peut être basculée vers l'arrière et vers le bas, sur laquelle des rails (50, 51) peuvent être prolongés vers l'arrière au-delà de l'extrémité de la surface de chargement de sorte que les wagons (1, 2, 3) sur ces rails (50, 51) peuvent être tirés sur la surface de chargement et peuvent être déposés dans la direction opposée sur les rails (4) d'une ligne ferroviaire.

3. Installation (10) selon la demande 1,
***caractérisé en ce que***
le dispositif se compose de deux wagons séparés (1, 58) qui peuvent être transportés sur route dans leur intégralité dans un seul véhicule routier (53) ou une seule remorque routière (48), qui peuvent se déplacer sur des rails et qui ont des roues (24) pouvant changer de voie, qui peuvent être accouplés ensemble avec un timon (7) de manière à assurer une traction par force et qui peuvent être reliés à des tuyaux et des câbles pour leur interaction fonctionnelle, le premier wagon étant conçu comme un wagon pulvérisateur (1) et tous les éléments nécessaires pour le pompage, le mélange et la décharge contrôlée des composants (A, B) fournis à l'unité de pulvérisation par des tuyaux flexibles (9, 10) appartenant à l'appareil, et le deuxième chariot (42) est conçu comme un camion-citerne avec des bacs collecteurs (56) pour la mise en place et le chauffage des conteneurs séparés (60, 61) avec les composants fluidiques (A, B) à insérer et à mélanger, et est équipé pour l'alimentation électrique d'un groupe électrogène diesel et de sa batterie de démarrage et d'une unité de commande (34) pour la commande électrique de tous les composants fonctionnant à l'électricité.

4. Installation (10) selon la revendication 1,
***caractérisé en ce que***
le dispositif se compose de deux wagons séparés (1, 58) avec des roues de rail (24) capables de changer l'écartement des voies, lesquels wagons (1, 58) peuvent être transportés sur la route dans leur intégralité dans un seul véhicule routier associé (53) ou une remorque routière (48), lesquels wagons mobiles (1, 48) peuvent être accouplés à un timon (7) de manière à assurer la traction et peuvent être reliés à des tuyaux et des câbles pour leur interaction fonctionnelle, le premier chariot étant conçu comme un chariot porte-conteneurs (2) et un chariot pulvérisateur (1), avec des bacs collecteurs (56) pour placer et chauffer les conteneurs séparés (60), 61) avec les composants fluides (A, B) à insérer et à mélanger, et équipé de tous les éléments nécessaires pour le pompage, le mélange et la décharge contrôlée des composants (A, B) pompés des conteneurs (60, 61) par des tuyaux flexibles (9, 10) au moyen d'une unité de pulvérisation, et le deuxième wagon pour l'alimentation en énergie est équipé d'un générateur de courant diesel avec sa batterie de démarrage et une unité de commande (34) pour la commande électrique de tous les composants fonctionnant à l'électricité.

5. Installation (10) selon la demande 1,
***caractérisé en ce que***
le dispositif se compose de trois wagons séparés (1, 2, 3) qui sont en état de marche dans leur intégralité dans un seul véhicule routier (53) ou une seule remorque routière (48) associés, sont mobiles sur des rails (4, 50, 51) et ont des roues (24) qui peuvent changer de voie, peuvent être accouplés entre eux par traction et par force avec des timons (7, 8) et peuvent être reliés à des tuyaux et des câbles pour leur interaction fonctionnelle, le premier wagon étant conçu comme un wagon pulvérisateur (1) et tous les éléments nécessaires au pompage, mélange et décharge contrôlée des composants (A, B) fournis par des tuyaux flexibles (9, 10) à une unité de pulvérisation, le second chariot étant sous la forme d'un chariot porte-conteneurs (2) avec des bacs collecteurs (56) pour placer et chauffer les conteneurs séparés (60, 61) est conçue avec les composants fluides (A, B) à utiliser et à mélanger, et la troisième voiture est équipée comme voiture d'alimentation (3) d'un générateur de courant diesel avec sa batterie de démarrage et une unité de commande (34) pour la commande électrique de tous les composants fonctionnant à l'électricité.

6. Installation selon l'une des revendications précédentes,
***caractérisé en ce que***
l'unité de pulvérisation sur le chariot de pulvérisation (1) comporte, à l'extérieur de ce chariot de pulvérisation (1), une barre de pulvérisation (17) s'étendant transversalement à la direction de déplacement du chariot, laquelle barre de pulvérisation est déplaçable horizontalement et verticalement sous la commande d'un moteur et est montée sur un bras (18) de manière à pouvoir pivoter dans toutes les directions, qui s'étend sur plus de la largeur du chariot de pulvérisation (1) et qui comporte une pluralité de buses (30) pour produire différents types de pulvérisation (31), et le chariot porte-conteneurs (2) comporte un système de chauffage autorégulé pour l'intérieur des bacs collecteurs (56), pour maintenir les composants (A, B) à une température souhaitée, et que des batteries sont prévues pour le stockage intermédiaire de l'énergie électrique, et que l'unité de commande (34) est programmable par mémoire, est conçue pour différents programmes de sortie et pour l'alimentation et la commande du dispositif de chauffage, des pompes à engrenages (11, 12) pour les composants (A, B), du mouvement des buses de pulvérisation (30) et des dispositifs de commande avec leurs capteurs (43, 45).

7. Installation selon l'une des revendications précédentes,
***caractérisée en ce que***
le véhicule routier associé (53) pour le transport routier du dispositif est un véhicule de transport surbaissé automoteur ou une remorque routière à double essieu (48) avec une zone de chargement pour le transport du véhicule et un treuil à câble en acier (52), la zone de chargement pouvant être basculée électriquement ou hydrauliquement vers l'arrière, et des rails (50, 51) étant disposés sur la zone de chargement, et dans lequel d'autres rails (51) peuvent être prolongés ou pivotés vers l'arrière au-delà de la surface de chargement en position inclinée de la surface de chargement de telle sorte que leurs extrémités arrière reposent sur le sol ou sur les rails (4) d'une voie ferrée se déplaçant sur le sol, après quoi les wagons (1, 2, 3) peuvent être tirés avec leurs roues de rail (24) sur les rails (51) de la surface de chargement au moyen du treuil à câble d'acier (52) dans la remorque (48) et en sens inverse sur une voie ferrée.

8. Installation selon l'une des revendications précédentes,
***caractérisé en ce que***
le chariot de pulvérisation (1) comprend des conduites d'alimentation (9, 10) pour le transport des composants fluides (A, B), et une unité de mélange (29) pour le mélange des composants fluides (A, B) afin de former un mélange adhésif, et dans lequel les deux conduites d'alimentation (9, 10) sont reliées à une pompe à engrenages (11, 12) pouvant être commandée pour la régulation du débit et à un débitmètre massique (15) relié à un débitmètre massique (15), 16) pour le composant fluide respectif (A, B) par la conduite d'alimentation respective (9, 10), et l'unité de commande (34) est conçue de telle manière que, sur la base des débits détectés, un débit total et/ou un rapport de mélange entre les composants fluides (A, B) peut être maintenu par l'intermédiaire d'au moins une grandeur de sortie.

9. Installation selon l'une des revendications 1 à 6,
***caractérisé en ce que***
l'unité de commande (34) est conçue de telle sorte que le débit total et le rapport de mélange entre les composants du fluide (A, B) peuvent être réglés au moyen d'au moins deux variables de sortie.

10. Dispositif selon l'une des revendications précédentes,
***caractérisé en ce que***
l'unité de commande (34) est conçue de telle sorte que les débits des deux composants du fluide (A, B) peuvent être commandés en fonction de la vitesse de déplacement en les déterminant au moyen du capteur de vitesse de déplacement (43) du véhicule de pulvérisation (1).

11. Dispositif selon l'une des revendications précédentes,
***caractérisé en ce que***
la barre de pulvérisation (17) comprend une pluralité de buses (30), qui peuvent être chargées de manière sélective, pour produire un jet plat, en forme de rideau ou conique (31).

12. Méthode pour le fonctionnement d'un appareil selon l'une des revendications précédentes,
***caractérisé en ce que***
le véhicule routier est autopropulsé ou les wagons séparés (1, 2, 3) sont transportés par route sur un seul véhicule ou une seule remorque (48) jusqu'au lieu d'utilisation, et là, le véhicule routier est conduit sur la voie ferrée et mis en service, ou le véhicule routier ou la remorque (48) est conduit sur la voie ferrée et mis en service, ou le véhicule routier ou la remorque (48) est conduit sur la voie ferrée et mis en service, ou le véhicule routier ou la remorque (48) est conduit sur la voie ferrée et mis en service, ou le véhicule routier ou la remorque (48) est conduit sur la voie ferrée et mis en service, ou le véhicule routier ou la remorque (48) est conduit sur la voie ferrée et mis en service. soit le véhicule routier ou la remorque routière (48) est mis en place sur la voie ferrée et ensuite les wagons (1, 2, 3) sont déposés sur les rails (4) d'une voie ferrée à traiter et sont ensuite accouplés entre eux de manière articulée et par force de traction au moyen de timons (7, 8) et sont mis en service pour le pompage, le mélange et l'évacuation de l'adhésif contrôlés automatiquement.

13. Méthode selon la revendication 11,
***caractérisé en ce que***
pendant le refoulement de la colle, les débits des composants fluides sont détectés par la mesure continue des débits dans l'unité de commande (34) de l'appareil et comparés en comparant les données mesurées avec une valeur de consigne définie et au moins une grandeur de sortie, en particulier avec un signal de sortie pour la commande du débit total des pompes à engrenages (11, 12) et/ou le rapport de mélange des composants fluides (A, B) pour la surveillance continue du refoulement.

14. Méthode selon de l'une des revendications 11 à 12,
**caractérisé en ce que**
le rapport des débits des composants du fluide (A, B) est contrôlé par comparaison continue avec une valeur de consigne du rapport stockée dans l'unité de commande (34) et la première et/ou la deuxième grandeur de sortie est adaptée par l'unité de commande (34) en fonction de la différence entre le rapport déterminé et la valeur de consigne du rapport et la valeur de sortie est utilisée pour commander les pompes à engrenages (11, 12) et leurs débits est utilisé, ou qu'en cas d'écart des débits déterminés et/ou en cas d'écart du rapport des débits déterminés de plus d'une valeur maximale prédéterminée d'un écart, le déchargement et/ou le refoulement des composants fluides (A, B) est automatiquement arrêté par l'unité de commande (34) en arrêtant les pompes à engrenages (11, 12) et en fermant les vannes pneumatiques (19, 20).

15. Utilisation de l'appareil selon l'une des revendications 1 à 10 pour le transport de l'appareil à son lieu d'utilisation, pour la conduite du véhicule compatible avec le rail ou pour la dépose des wagons (1, 2, 3) du véhicule routier (54) ou de la remorque routière (58) sur la voie ferrée (4) de la ligne de chemin de fer à traiter et pour la décharge de colles à plusieurs composants avec au moins deux composants fluides (A, B) sur le lit de ballast (6) de cette ligne de chemin de fer en vue de leur collage par sections sur toute la largeur de la ligne de chemin de fer ou sur une partie de la largeur de la ligne de chemin de fer.
